# EUROPEAN PATENT SPECIFICATION

(11) **EP 3 585 571 B1**
(45) Date of publication and mention of the grant of the patent: **31.08.2022**
(21) Application number: 18757190.6
(22) Date of filing: 27.02.2018
(51) Int. Cl.: B25J 11/00, B25J 9/00, B25J 9/16, B25J 19/06, B25J 19/02, A47L 9/28, G08B 13/196, G08B 27/00, G05D 1/00, G05D 1/02, G01C 21/00

(54) **MOVING ROBOT AND CONTROL METHOD THEREOF**
MOBILER ROBOTER UND STEUERUNGSVERFAHREN DAFÜR
ROBOT MOBILE ET SON PROCÉDÉ DE COMMANDE

(30) Priority: 27.02.2017 KR 20170025617
(43) Date of publication of application: 01.01.2020
(73) Proprietor: LG Electronics Inc., Seoul 07336 (KR)
(72) Inventor: CHO, Minkyu, Seoul 08592 (KR); KIM, Jaewon, Seoul 08592 (KR); KIM, Hyunji, Seoul 08592 (KR)
(74) Representative: Ter Meer Steinmeister & Partner
(86) International application number: PCT/KR2018/002410
(87) International publication number: WO 2018/155999

(56) References cited:
- KR-A- 20000 002 482
- KR-A- 20040 011 010
- KR-B1- 101 234 799
- KR-B1- 101 297 255
- US-A1- 2005 237 188
- US-A1- 2009 154 769
- US-A1- 2013 206 177
- US-A1- 2016 022 107

## Description

### [Technical Field]

The present invention relates to moving robots and control methods thereof, and more particularly to a moving robot and a control method for performing both cleaning and monitoring operations while traveling areas to be cleaned based on a map.

### [Background Art]

Generally, mobile robots are a device that performs cleaning operations by sucking dust or foreign substances from a floor while travelling autonomously in an area to be cleaned without a user's operation.

Such moving robots detect the distance to obstacles, such as furniture, office supplies, walls, and the like, which are positioned in an area to be cleaned, and then perform mapping of the area to be cleaned based on results from the detection or perform operations for bypassing the obstacles by controlling driving of a left and right wheel. The moving robots include a sensing element, such as a laser, an ultrasonic wave, and a camera, or the like to detect the obstacles.

Korean Pat. No. 1,204,080 discloses monitoring of a specific area by installing a camera for monitoring invasion or accident occurrence for crime prevention and security. However, in this case, since only an image of a specific area can be taken at a location where the camera is installed, there arises a problem which it is not possible to monitor various locations.

Therefore, since the moving robot is moveable, monitoring for crime prevention and security in the house by using a moving robot equipped with a monitoring element has been proposed.

The moving robot can detect the movement of a specific object in the area to be monitored by using the sensing element and can detect a new obstacle which has not positioned yet. Therefore, it can perform monitoring and crime prevention functions for a predetermined area as well as detecting the obstacle while traveling by using the sensing element.

The conventional moving robot just moves in a direction that can travel without distinction of the area to be traveled in the house, and therefore, there is a case where it travels repeatedly any area in which it has already traveled. Therefore, there arises a problem which it is not possible to monitor all areas because the moving robot has not traveled in some areas. Although a map can be generated while traveling, it is necessary to generate a new map each time the moving robot moves from the current position and to determine the position based on the initial starting position, and therefore, it takes time to grasp the overall structure of an indoor area to be traveled, and it has been difficult to monitor the overall indoor area.

In Korean Pat. No. 0,479,370, if a patrol mode or a security mode is set, the characteristic data in an area to be monitored is obtained by photographing a ceiling, and the position of an object to be monitored and the position of a door are determined based on the obtained characteristic data, and then an indoor scene is photographed and transmitted to a designated mobile terminal to monitor the situation in the house.

However, the operation of a conventional mobile robot is limited to monitor only a designated location, i.e., the location designated as the sensing object, through photographing. That is, the conventional mobile robot has a problem in that, even if there is an intruder while moving to a designated position, the mobile robot cannot detect. Also, since the monitoring is mainly performed the entrance door, there is a problem that monitoring of the overall indoor area cannot be effectively performed. In addition, since the moving robot transmits an image in real time, the user can only perform monitoring in real time, and thus there is a problem that it is difficult to check the past image.

US 2013/206177 A1 describes an operation of a robotic cleaner which includes generating at least one map including information regarding a space to be cleaned by using information measured by at least one sensor. The operation also includes setting a cleaning path by using the at least one map, and cleaning according to the cleaning path.

US 2016/022107 A1 describes a method of controlling a robot cleaner which includes recognizing information on a monitoring standby position by a robot cleaner, moving to the monitoring standby position at a monitoring start time by the robot cleaner, acquiring an image, by an image acquisition unit of the robot cleaner, at the monitoring standby position, determining whether an event has occurred, by the robot cleaner, based on the image acquired by the image acquisition unit, transmitting the image acquired by the image acquisition unit to an external remote terminal when it is determined that the event occurred.

US 2005/237188 A1 describes that while a cleaner body roams about a room so as to clean the room, map information is produced. If the body passes nearby a marker, positional information acquired from the marker is added to the map information. The marker is used to specify the position of a base phone included in the intercom or a standby position. In watch mode, whether a watch instruction is received from the base phone is checked. After the cleaner body is moved to the standby position, human body sensors are used to sense whether an intruder has invaded into a house. As soon as invasion is sensed, the cleaner body is moved to face the intruder. Thereafter, imaging is instructed, and photographic image data is acquired and transmitted over a wireless LAN.

### [Disclosure]

### [Technical Problem]

It is an object of the present disclosure to provide a moving robot and a control method for performing patrolling and monitoring operations in a cleaning area while traveling per area by using a map.

### [Technical Solution]

The invention is specified by the independent claims. Preferred embodiments are covered by the dependent claims.

A moving robot according to the invention includes a main body configured to suck foreign substances while traveling the cleaning area, a data unit in which a map of the cleaning area is stored, an image acquisition unit configured to take an image, such as video or photo in front of the main body, and a controller, in a case where a monitoring mode is set, configured to set at least one area of a plurality of areas composing the cleaning area based on the map as at least one monitoring area, generate monitoring data based on images being taken by the image acquisition unit while moving in the monitoring areas, analyze the monitoring data, and monitor the cleaning area and detect intrusion.

In response to date or a command input through the operation unit or a mobile terminal, the controller may be configured to set a selected area from the plurality of areas as the monitoring area.

If a monitoring mode is selected without a selection of an area, the controller may be configured to set the plurality of areas as the monitoring area.

The controller may be configured to set at least one location for the monitoring areas, and the monitoring location is at least one of locations dedicated by the mobile terminal based on the map, or the center point of the monitoring area.

The controller may be configured to set at least one monitoring path connecting monitoring locations to one another, to cause the main body to move along the monitoring path, and to monitor the cleaning area.

In response to a form of the monitoring data, the controller may be configured to control a rotation operation of the main body at a monitoring location set among the monitoring areas.

If at least one monitoring direction is set for the monitoring areas, the controller may be configured to, by controlling the main body at the monitoring location, adjust a shooting angle of the image acquisition unit, and generate the monitoring data in the monitoring direction.

Furthermore, a control method of a moving robot according to the invention includes a step for setting a monitoring mode for a cleaning area, in response to data or a command input from an operation unit or a mobile terminal, a step for setting at least one area of a plurality of areas composing the cleaning area as a monitoring area, a step for the main body moving to the monitoring area, a step for generating monitoring data based on images taken from the monitoring area, a step for analyzing the monitoring data, monitoring the cleaning area and detecting intrusion, and a step for outputting alert sound if intrusion is detected.

In a case where the monitoring mode is set, if at least one area from the plurality of the areas is selected by the operation unit or the mobile terminal, the method may further include a step for setting the selected area as a monitoring area, and, if the monitoring mode is set without selection of an area, a step for setting the plurality of the areas as monitoring areas. The method may further include a step for setting at least one monitoring location for the monitoring area, and, if reaches the monitoring area, a step for moving to the monitoring location and generating monitoring data from images being taken at the monitoring location.

In the monitoring location, the method may further include a step for rotating the main body at predetermined angle, a step for stopping it for a predetermined time after rotating has been performed, a step for taking the images during stopping of the main body, a step for generating monitoring data in the form of an image based on the taken images and repeating rotating and stopping.

In the monitoring location, the method may further include a step for the main body rotating at a low speed below a predetermined speed, a step for taking the images while the main body is rotating, and a step for generating monitoring data in the form of a moving image or panorama image from the images.

The method may further include a step for displaying a map of the cleaning area on a display screen of the mobile terminal, a step for selecting at least one area from the plurality of the areas by using the map, a step for setting a monitoring location or monitoring direction for the monitoring area, and a step for transmitting a monitoring command including data of at least one of the monitoring area, monitoring location, and monitoring direction to the main body.

The method may further include a step for transmitting the monitored data to the mobile terminal, and a step for displaying the monitored data on the display screen of the mobile terminal.

Furthermore, a control method of a moving robot according to an embodiment of the present disclosure includes a step for setting a monitoring mode for a cleaning area, in response to data or a command input from an operation unit or a mobile terminal, a step for setting at least one area of a plurality of areas composing the cleaning area as a monitoring area, a step for the main body moving to the monitoring area, a step for generating monitoring data by taking images of the monitoring area, a step for analyzing the monitored data and monitoring the cleaning area, a step for detecting intrusion, and a step for outputting alert sound if intrusion is detected.

### [Advantageous Effects]

A moving robot and a control method thereof according to an embodiment of the present disclosure can perform monitoring while moving in a plurality of areas by taking images while moving the areas based on a map of a cleaning area composed of a plurality of areas. Furthermore, according to the present disclosure, the moving robot can perform monitoring while moving in all the plurality of areas, monitor a specific area dedicated for monitoring, and, through dedicating of a monitoring location in an area, monitor the whole area by taking images while rotating in the monitoring location.

In accordance with the present disclosure, a specific location in the areas can be set as a monitoring location, and, by dedicating a monitoring direction in the monitoring location, images can be taken at a specific shooting angle. Therefore, monitoring can be performed based on images being taken at the position and in the direction a user desires. In accordance with the present disclosure, since a monitoring path connecting monitoring locations to one another can be set, it is possible to perform monitoring of a plurality of areas with a minimum movement, change or add a monitoring location based on the obstacle information stored in a map, and generate monitoring data by taking an image of a blind spot.

In accordance with the present disclosure, since a schedule can be set so that monitoring is performed at a predetermined time interval or at a specified time, the monitoring of a cleaning area can be performed with one setting, and the checking of monitoring data can be made through the mobile terminal. Also, if necessary, the mobile terminal can be controlled to take images in specific directions, and therefore, the monitoring can be effectively performed.

In accordance with the present disclosure, since obstacles can be recognized by analyzing of images, it is possible to detect whether intrusion is occurred. If the intrusion is detected, an alerting sound can be outputted, and a signal associated with the intrusion detection can be transmitted, and thus a security function is enhanced.

### [Description of Drawings]

FIG. 1 is a perspective view illustrating a moving robot according to an embodiment.
FIG. 2 is a view illustrating a horizontal angle of view of the moving robot of FIG. 1.
FIG.3 is front views illustrating the moving robot of FIG. 1.
FIG. 4 is a view illustrating a bottom surface of the moving robot of FIG. 1.
FIG. 5 is a block view illustrating main parts of the moving robot according to an embodiment.
FIGS. 6 and 7 are views for illustrating methods of generating maps of the moving robot according to an embodiment.
FIG. 8 is a view illustrating an example map generated in the moving robot according to an embodiment.
FIG. 9 is views illustrating monitoring locations of the moving robot according to an embodiment.
FIG. 10 is views illustrating monitoring methods of the moving robot per area according to an embodiment.
FIG. 11 is a view illustrating setting of monitoring locations of the moving robot according to another embodiment.
FIG. 12 is views illustrating moving methods of the moving robot according to the monitoring locations of FIG. 11.
FIG. 13 is views illustrating moving methods in monitoring modes of the moving robot according to an embodiment.
FIG. 14 is views illustrating monitoring locations and moving paths of the moving robot according to an embodiment.
FIG. 15 is a view illustrating a control screen of a mobile terminal for controlling the moving robot according to an embodiment.
FIG. 16 is views illustrating a method of setting manually monitoring areas of the moving robot according to an embodiment.
FIG. 17 is a view illustrating a method of setting manually monitoring locations of the moving robot according to an embodiment.
FIG. 18 is example views illustrating a monitoring screen of a mobile terminal according to an embodiment.
FIG. 19 is an example view illustrating a method of setting monitoring directions of the moving robot according to an embodiment.
FIG. 20 is example views illustrating setting of monitoring locations of the moving robot according to another embodiment.
FIG. 21 is an example view illustrating a control screen of a mobile terminal in accordance with setting of a monitoring mode of the moving robot according to an embodiment.
FIG. 22 is a flow chart illustrating monitoring methods of the moving robot for a cleaning area according to an embodiment.
FIG. 23 is a flow chart illustrating control methods in accordance with monitoring schedules of the moving robot according to another embodiment.
FIG. 24 is a flow chart illustrating control methods in accordance with setting of monitoring modes of the moving robot according to an embodiment.

### [Best Mode]

Advantages, features and demonstration methods of the disclosure will be clarified through various embodiments described in more detail below with reference to the accompanying drawings. The disclosure may, however, be embodied in different forms and should not be construed as limited to the embodiments set forth herein. Rather, these embodiments are provided so that this disclosure will be thorough and complete, and will fully convey the scope of the present disclosure to those skilled in the art. Further, the present invention is only defined by scopes of claims. Wherever possible, the same reference numbers will be used throughout the specification to refer to the same or like parts. Furthermore, a controller and each unit of a moving robot may be implemented with one or more processors, and/or hardware devices.

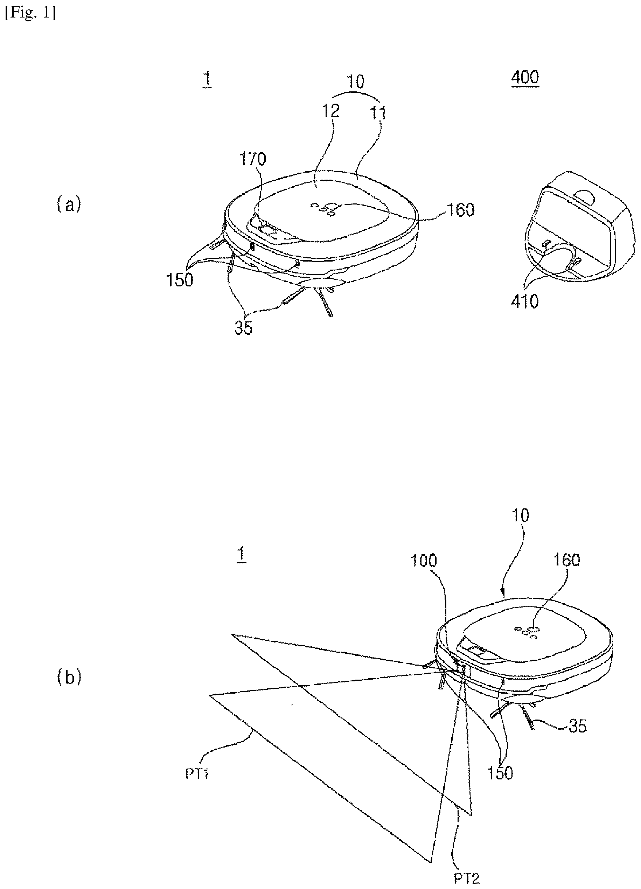

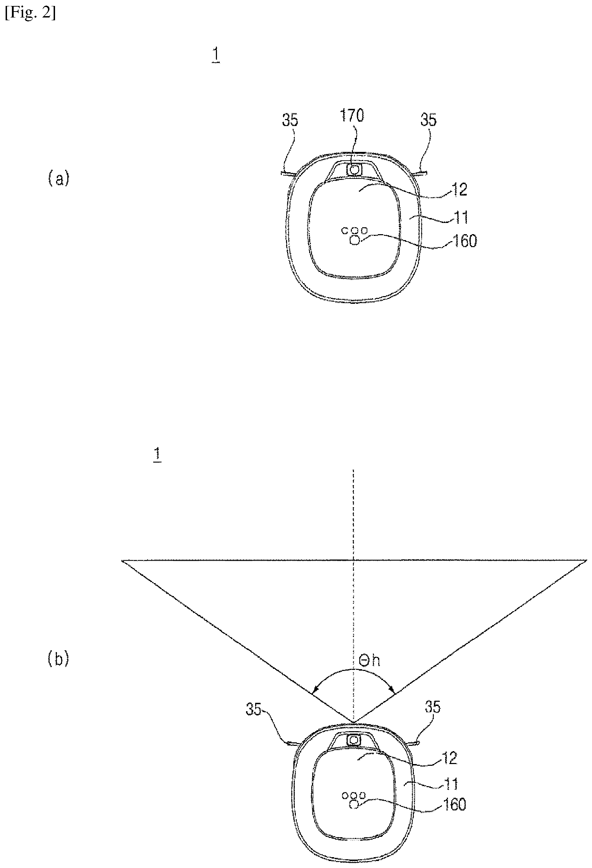

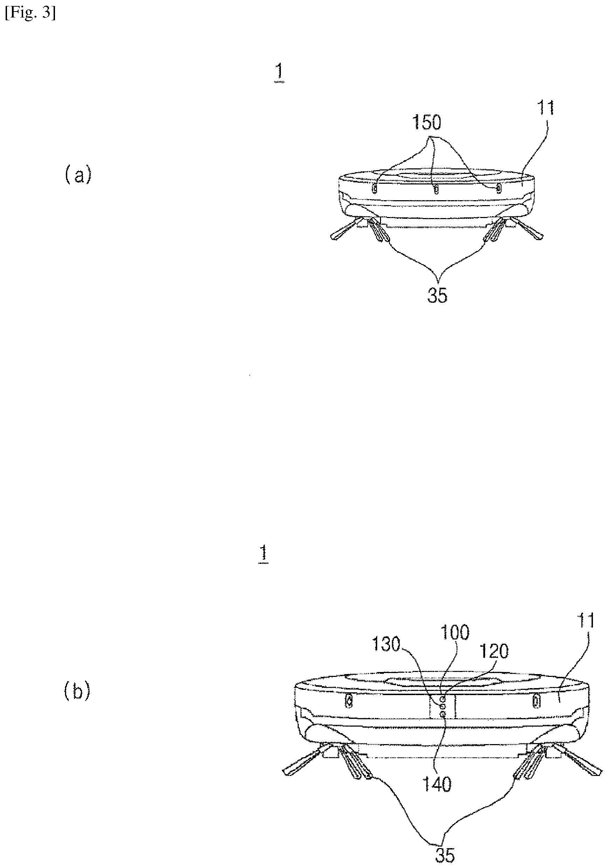

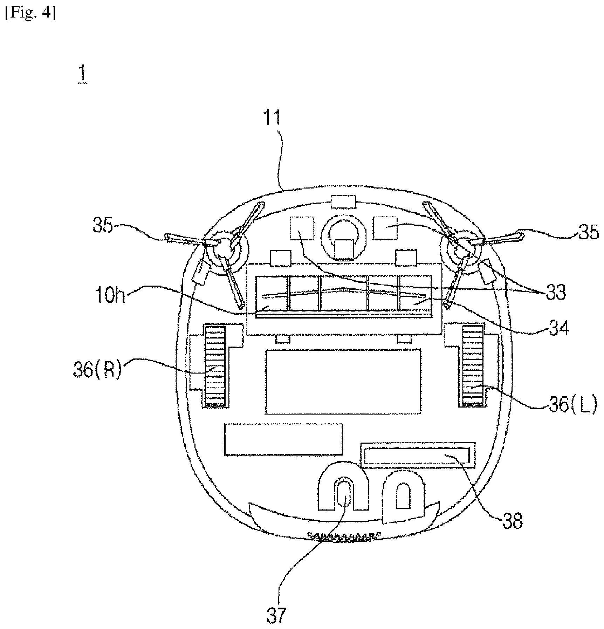

FIG. 1 is a perspective view illustrating a moving robot according to an embodiment. FIG. 2 is a view illustrating a horizontal angle of view of the moving robot of FIG. 1. FIG.3 is front views illustrating the moving robot of FIG. 1. FIG. 4 is a view illustrating a bottom surface of the moving robot of FIG. 1.

Referring to FIGS. 1 and 4, a moving robot 1 according to an embodiment of the present disclosure includes a main body 10 moving on a floor of a cleaning area and sucking foreign substances, such as dust, particulates, or the like, and a sensing element being disposed at the front surface of the main body 10 and detecting obstacles.

The main body 10 may include a casing 11 forming an outer appearance and forming a space for accommodating components therein, which are composing the body 10, a suction unit 34 being disposed at the casing 11 and sucking foreign substances, such as dust, trash, particulates, or the like and a left wheel 36L and a right wheel 36R rotatably installed on the casing 11. As the left wheel 36L and the right wheel 36R rotate, the main body 10 moves on a floor of a cleaning area and, during this process, foreign substances are sucked through a suction unit 34.

The suction unit 34 may include a suction fan for generating a suction force and a suction inlet 10h for sucking the air stream generated by the rotation of the suction fan. The suction unit 34 may include a filter for collecting foreign substances from the air stream sucked through the suction inlet 10h, and foreign substances collecting container in which foreign substances collected by the filter are accumulated.

In addition, the main body 10 may include a travel driving unit for driving the left wheel 36(L) and the right wheel 36(R). The travel driving unit may include at least one driving motor. At least one driving motor may include a left wheel driving motor for rotating the left wheel 36(L) and a right wheel driving motor for rotating the right wheel 36(R).

Operations of the left and right wheel driving motors may be configured to be independently controlled by a travel controller of a controller, and therefore, the main body 10 can move forward, backward, or turn round. For example, in a case where the main body 10 travels straight, the left wheel driving motor and the right wheel driving motor may rotate in the same direction. However, in a case where the left wheel driving motor and the right wheel driving motor rotate at a different speed or rotate in the opposite direction, the traveling direction of the main body 10 can be changed. At least one auxiliary wheel 37 for stable support of the main body 10 may be further rotatably installed.

A plurality of brushes 35 being located on the front side of the bottom surface of the casing 11 and having a plurality of radially extending hairs, bristles, or thin pieces of plastic, may be further provided in the main body. The foreign substances may be removed from the floor of a cleaning area by the rotation of the brushes 35, and thus the foreign substances separated from the floor may be sucked through the suction inlet 10h and stored in the collecting container.

A control panel including an operation unit 160 for receiving various commands for controlling the moving robot 1 from a user may be disposed on the upper surface of the casing 11.

As in FIG. 1(a), the sensing element may include a sensing unit 150 for detecting obstacles by using a plurality of sensors, and an image acquisition unit 140, 170 taking images, such video, photo, or the like.

In addition, the sensing element may include, as in FIG. 1(b), an obstacle sensing unit 100 being disposed at the front surface of the main body 10 and emitting a light pattern and detecting obstacles based on images being taken. The obstacle sensing unit 100 may include an image acquisition unit 140, and the sensing element may include both the obstacle sensing unit and the sensing unit 150.

The image acquisition unit 140 may be installed to face a ceiling, as in FIG. 2(a), or installed to face forward, as in FIG. 3(3). In some cases, one image acquisition unit 140 may be installed, or both image acquisition units 140 facing forward and facing the ceiling may be installed.

An obstacle sensing unit 100 may be disposed on the front surface of the main body 10.

The obstacle sensing unit 100 may be mounted to the front surface of the casing 11, and may include a first pattern emission unit 120, a second pattern emission unit 130, and an image acquisition unit 140. In this case, as shown in the drawing, the image acquisition unit may be installed at a lower portion of the pattern emission unit, but, if necessary, may be disposed between the first and second pattern emission units.

In addition, as described above, a second image acquisition unit 170 may be further provided at an upper end of the main body. The second image acquisition unit 170 may take images of an upper end portion of the main body, i.e., the ceiling.

The main body 10 may include a rechargeable battery 38. A charging terminal 33 of the battery 38 may be connected to a commercial power source (e.g., a power outlet in a home), or the main body 10 may be docked on a separate charging stand connected to the commercial power source. Thus, the charging terminal 33 can be electrically connected to the commercial power source through contact with a terminal of a charging stand 410, and the battery 38 can be charged. Electric components composing the moving robot 1 may be supplied with power from the battery 38, and therefore, in a state where the battery 38 is charged and the moving robot 1 is electrically disconnected from the commercial power source, an autonomous travelling can be achieved.

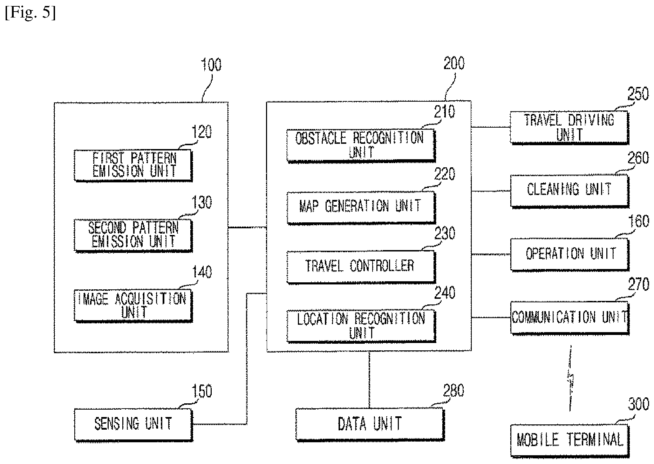

FIG. 5 is a block view illustrating main parts of the moving robot according to an embodiment.

As shown in FIG. 5, the moving robot 1 may include a travel driving unit 250, a cleaning unit 260, a data unit 280, an obstacle sensing unit 100, a sensing unit 150, a communication unit 270, an operation unit 160, and a controller 200 for controlling overall operation.

The operation unit 160 may include an input unit such as at least one button, switch, and touch pad, etc. to receive a user command. The operation unit may be disposed at the upper end of the main body 10, as described above.

The data unit 280 may store an obstacle sensing signal being input from the obstacle sensing unit 100 or the sensing unit 150, may store reference data necessary for an obstacle recognition unit 210 to determine obstacles, and may store obstacle information on detected obstacle. In addition, the data unit 280 may store control data for controlling the operation of the moving robot and data associated with a cleaning mode of the moving robot, and store a map which is generated by a map generator and includes obstacle information. The data unit 280 may store a basic map, a cleaning map, a user map, and a guide map. The obstacle sensing signal may include a detection signal such as an ultrasonic wave, laser, or the like by the sensing unit, and an acquisition image of the image acquisition unit.

In addition, the data unit 280 may store data that can be read by a microprocessor and may include a hard disk drive (HDD), a solid-state disk (SSD), a silicon disk drive (SDD), ROM, RAM, CD-ROM, a magnetic tape, a floppy disk, and an optical data storage device.

The communication unit 270 may communicate with a mobile terminal wirelessly or through a wired connection. In addition, the communication unit 270 may be connected to the Internet network through a home network and may communicate with an external server or a mobile terminal controlling the moving robot.

The communication unit 270 may transmit a generated map to the mobile terminal, receive a cleaning command from the mobile terminal, and transmit data of the operation state of the moving robot and the cleaning state to the mobile terminal. The communication unit 270 may include not only a short-distance wireless communication module such as ZigBee, Bluetooth, etc. but also a communication module such as Wi-Fi, WiBro, etc., and transmit and receive data.

Meanwhile, the mobile terminal may be any apparatus in which a communication module is mounted for connecting to a network and a program for controlling the moving robot or an application for controlling the moving robot is installed, and may be a computer, a laptop, a smart phone, a PDA, a tablet PC, or the like. In addition, the mobile terminal may be a wearable device such as a smart watch.

The travel driving unit 250 may include at least one driving motor and allow the moving robot to travel according to a control command of a travel controller 230. As described above, the travel driving unit 250 may include the left wheel driving motor for rotating the left wheel 36(L) and the right wheel driving motor for rotating the right wheel 36(R).

The cleaning unit 260 may cause a brush to easily suck dust or foreign substances around the moving robot and cause a suction device to suck the dust or foreign substances. The cleaning unit 260 may control the operation of the suction fan included in the suction unit 34 that sucks foreign substances such as dust or trash so that the dust may be introduced into the foreign substances collecting container through the suction inlet.

The obstacle sensing unit 100 may include the first pattern emission unit 120, the second pattern emission unit 130, and the image acquisition unit 140.

The sensing unit 150 may include a plurality of sensors to detect obstacles. The sensing unit 150 may assist obstacle detection of the obstacle sensing unit 100. The sensing unit 150 may sense an obstacle in front of the main body 10, i.e., in the traveling direction, using at least one of laser, ultrasonic wave, and infrared ray. In a case where the transmitted signal is reflected and input, the sensing unit 150 may send information on the presence of an obstacle or the distance to the obstacle to the controller 200 as an obstacle sensing signal.

In addition, the sensing unit 150 may include at least one tilt sensor to detect the tilt of the main body. If the main body is tilted to the front, rear, left, and right directions of the main body, the tilt sensor may calculate the tilted direction and angle. The tilt sensor may be a tilt sensor, an acceleration sensor, or the like. In the case of the acceleration sensor, any of gyro type, inertial type, and silicon semiconductor type may be used.

As described above, the first pattern emission unit 120, the second pattern emission unit 130, and the image acquisition unit 140 may be installed in the front of the main body 10 to emit a first and second pattern light (PT1, PT2) to the front of the moving robot 10, and the obstacle sensing unit 100 may acquire images by photographing light of the emitted pattern.

The obstacle sensing unit 100 may send the acquired image to the controller 200 as an obstacle sensing signal.

The first and second pattern emission units 120 and 130 of the obstacle sensing unit 100 may include a light source, and an optical pattern projection element (OPPE) that generates a certain pattern by passing through of the light emitted from the light source. The light source may be a laser diode (LD), a light emitting diode (LED), or the like. Laser light is superior to other light sources in terms of monochromaticity, straightness, and connection characteristics, thereby it is possible to obtain a precise distance measurement. The infrared light or visible light may incur variation significantly in the accuracy of the distance measurement according to factors such as the color and the material of the object. Accordingly, a laser diode is preferable as a light source. The optical pattern projection element (OPPE) may include a lens, and a diffractive optical element (DOE). Various patterns of light may be emitted according to the configuration of the OPPE included in each of the pattern emission units 120 and 130.

The first pattern emission unit 120 may emit light of the first pattern (hereinafter, referred to as a first pattern light) toward the front lower side of the main body 10. Therefore, the first pattern light may be incident on the floor of a cleaning area.

The first pattern light may be in the form of a horizontal line. In addition, it is possible that the first pattern light PT1 is configured to be in the form of a cross pattern in which a horizontal line and a vertical line intersect each other.

The first pattern emission unit 120, the second pattern emission unit 130, and the image acquisition unit 140 may be vertically arranged in a line. The image acquisition unit 140 may be disposed at a lower portion of the first pattern emission unit 120 and the second pattern emission unit 130. However, the present disclosure is not limited thereto, and the image acquisition unit 140 may be disposed at an upper portion of the first pattern emission unit 120 and the second pattern emission unit 130.

In an embodiment, the first pattern emission unit 120 may be positioned on an upper side and may emit the first pattern light PT1 downwardly toward the front to detect obstacles located a lower portion than the first pattern emission unit 120. The second pattern emission unit 130 may be positioned at a lower side of the first pattern emission unit 120 and may emit light of the second pattern (PT2, hereinafter, referred to as a second pattern light) upwardly toward the front. Accordingly, the second pattern light PT2 may be emitted to a wall or an obstacle or a certain portion of the obstacle located at least higher than the second pattern emission unit 130 from the floor of a cleaning area.

The second pattern light PT2 may have a pattern different from the first pattern light PT1, and preferably may include a horizontal line. Here, the horizontal line is not necessarily a continuous line segment, but may be a dotted line.

Meanwhile, as shown in FIG. 2, an emission angle θh may indicate a horizontal emission angle of the first pattern light PT1 emitted from the first pattern emission unit 120, and represent an angle formed between both ends of the horizontal line Ph and the first pattern emission unit 120. It is preferable that the emission angle is set in the range of 130 degrees to 140 degrees, but is not limited thereto. The dotted line shown in FIG. 2 may be directed toward the front of the moving robot 1, and the first pattern light PT1 may be configured to be symmetrical with respect to the dotted line.

Similarly to the first pattern emission unit 120, a horizontal emission angle of the second pattern emission unit 130 may be defined, preferably, in the range of 130 to 140 degrees. According to an embodiment, the second pattern emission unit 130 may emit the second pattern light PT2 at the same horizontal emission angle as the first pattern emission unit 120. In this case, the second pattern light P2 may also be formed symmetrically with respect to the dotted line shown in FIG. 2.

The image acquisition unit 140 may acquire images in front of the main body 10. Particularly, the pattern lights PT1 and PT2 may appear in the image acquired by the image acquisition unit 140 (hereinafter, referred to as an acquisition image). Hereinafter, the image of the pattern lights PT1 and PT2 displayed in the acquisition image may be referred to as a light pattern. Since this is substantially images, formed in an image sensor, of the pattern light PT1 and PT2 incident on an actual space, the same reference numeral as the pattern light PT1 and P2T may be assigned. Thus, the image corresponding to the first pattern light PT1 and the second pattern light PT2 respectively may be referred to as a first light pattern PT1 and a second light pattern PT2.

The image acquisition unit 140 may include a digital camera that converts an image of an object into an electrical signal and then converts into a digital signal to store the digital signal in a memory device. The digital camera may include an image sensor and an image processor.

The image sensor may be an apparatus for converting an optical image into an electrical signal. The image sensor may include a chip on which a plurality of photo diodes is integrated, and the photodiode may be a pixel. Charges may be accumulated in the respective pixels by the image, formed in the chip, resulted from the light passing through a lens. The charges accumulated in the pixel may be converted into an electrical signal (e.g., a voltage). A charge coupled device (CCD) and a complementary metal oxide semiconductor (CMOS) are well known as the image sensor.

The image processing unit may be configured to generate a digital image based on the analog signal output from the image sensor. The image processing unit may include an AD converter for converting an analog signal into a digital signal, a buffer memory for temporarily storing digital data according to the digital signal output from the AD converter, and a digital signal processor (DSP) for processing the data stored in the buffer memory and configuring a digital image.

The controller 200 may include the obstacle recognition unit 210, a map generation unit 220, a travel controller 230, and a location recognition unit 240.

The obstacle recognition unit 210 may be configured to determine an obstacle through the acquisition image input from the obstacle sensing unit 100. The travel controller 230 may be configured to control the travel driving unit 250 to change the moving direction or the traveling path in accordance with obstacle information to pass the obstacle or to bypass the obstacle.

The travel controller 230 may be configured to control the travel driving unit 250 to independently control the operation of the left and right wheel driving motors, and thus the main body 10 can travel straight or turn.

The obstacle recognition unit 210 may be configured to store an obstacle sensing signal input from the sensing unit 150 or the obstacle sensing unit 100 in the data unit 280, and analyze the obstacle sensing signal to determine an obstacle.

The obstacle recognition unit 210 may be configured to determine whether there is a forward obstacle based on the signal of the sensing unit, and analyze the acquisition image to determine the location, size, and shape of the obstacle.

The obstacle recognition unit 210 may be configured to analyze the acquisition image and extract a pattern. The obstacle recognition unit 210 may be configured to extract a light pattern which is generated when the light of the pattern emitted from the first pattern emission unit or the second pattern emission unit is emitted on the floor or the obstacle, and determine an obstacle based on the extracted light pattern.

The obstacle recognition unit 210 may be configured to detect the light pattern PT1 and PT2 from the image (acquisition image) acquired by the image acquisition unit 140. The obstacle recognition unit 210 may be configured to detect feature such as point, line, surface, and the like from certain pixels composing the acquisition image, and detect the light pattern PT1 and PT2 or the point, line, surface, and the like that compose the pattern PT1 and PT2 based on the detected feature.

The obstacle recognition unit 210 may be configured to extract lines made by successive presence of pixels which are brighter than the surrounding area, and extract a horizontal line constituting the first light pattern PT1 and a horizontal line constituting the second light pattern PT2. However, the present disclosure is not limited thereto. Various techniques for extracting a desired pattern from a digital image are already known, and the obstacle recognition unit 210 may extract the first light pattern PT1 and the second light pattern PT2 by using known techniques.

In addition, the obstacle recognition unit 210 may be configured to determine whether an obstacle is present based on the detected pattern, and determine the shape of the obstacle. The obstacle recognition unit 210 may be configured to determine an obstacle based on the first light pattern and the second light pattern, and calculate the distance to the obstacle. In addition, the obstacle recognition unit 210 may be configured to determine the size (height) and the shape of the obstacle through a shape of the first light pattern and the second light pattern, and a change of the light pattern obtained when approaching the obstacle.

The obstacle recognition unit 210 may be configured to determine an obstacle through the first and second light patterns based on the distance to a reference location. In a case where the first light pattern PT1 appears in a location lower than the reference location, the obstacle recognition unit 210 may be configured to determine that a downward ramp exists. In a case where the first light pattern PT1 disappears, the obstacle recognition unit 210 may be configured to determine that there exists a cliff. In addition, in a case where the second light pattern appears, the obstacle recognition unit 210 may be configured to determine a forward obstacle or an upper obstacle.

The obstacle recognition unit 210 may be configured to determine whether the main body is tilted, based on tilt information input from the tilt sensor of the sensing unit 150. In a case where the main body is tilted, the obstacle recognition unit 210 may be configured to compensate the location of the light pattern of the acquisition image for the tilt.

The travel controller 230 may be configured to detect the presence and movement of an obstacle in a cleaning area based on data input from the sensing element

The obstacle recognition unit 210 may be configured to detect the presence of a new obstacle or the movement of a specific object in a cleaning area, by using at least one of the acquisition image input from the image acquisition unit 140 of the obstacle sensing unit 100, the acquisition image input from the second image acquisition unit 140 or 170, and the detection signal input from the sensing unit 150.

The travel controller 230 may be configured to cause the travel driving unit 250 to travel in a designated area of a cleaning area and perform cleaning, and cause the cleaning unit 260 to perform cleaning by sucking dust while traveling.

In response to the obstacle recognized by the obstacle recognition unit 210, the travel controller 230 may be configured to determine whether it is possible to travel or to enter, and then set a travel path to approach the obstacle and travel, to pass the obstacle, or to avoid the obstacle, and thus control the travel driving unit 250.

In addition, the travel controller 230, if a monitoring mode is set, may be configured to travel along a dedicated path, control the travel driving unit 250 by which the main body is moved to a dedicated location. In a case where not only a location but also a shooting angle is set, the travel controller 230, in case of taking an indoor area with the obstacle sensing unit, may be configured to cause the travel driving unit 250 to take a dedicated location at a dedicated angle and rotate the main body 10. The travel controller 230 may be configured to cause the travel driving unit 250 to rotate on a per-predetermined-angle basis which may be predetermined while the obstacle sensing unit 100 taking the indoor area.

The travel controller 230, in case of changing a shooting location according to a monitoring mode, may be configured to control the travel driving unit 250 by which the main body 10 is traveled or turned to a specific direction, in response to a control command received from the mobile terminal 300.

The map generation unit 220 may be configured to generate a map in which a cleaning area is divided into a plurality of areas, based on the information on the obstacle determined by the obstacle recognition unit 210.

The map generation unit 220 may be configured to generate a map of a cleaning area based on the obstacle information while traveling the cleaning area, when performing an initial operation or a map of the cleaning area is not stored. In addition, the map generation unit 220 may be configured to update a pre-generated or existing map, based on the obstacle information acquired during the traveling.

The map generation unit 220 may be configured to generate a basic map based on the information acquired from the obstacle recognition unit 210 while traveling, and generate a cleaning map by dividing the area of the basic map into a plurality of areas. In addition, the map generation unit 220 may be configured to adjust the areas of the cleaning map and set attributes of the areas to generate a user map and a guide map.

The basic map may be a map in which the shape of a cleaning area acquired through traveling is displayed as an outline, and the cleaning map may be a map in which the area of the basic map is divided into a plurality of areas. The basic map and the cleaning map may include a movable area of the moving robot and an obstacle information. The user map may be a map in which the area of the cleaning map is simplified, and the shape of the outline is readjusted and processed, and visual effects thereof is added. The guide map may be a map in which the cleaning map and the user map are overlapped. Since the cleaning map is displayed in the guide map, a cleaning command may be inputted based on the area where the moving robot can travel in actual.

After the basic map is generated, the map generation unit 220 may be configured to generate a map in which a cleaning area is divided into a plurality of areas, and which includes at least one passage for connecting the plurality of areas to one another and information on one or more obstacles in the respective areas.

The map generation unit 220 may be configured to divide a cleaning area into a plurality of small areas, set at least one divided small area as at least one representative area, set the divided small areas as separate detailed areas, and then combine the separated detailed areas into the at least one representative area. Therefore, a map divided into areas may be generated.

The map generation unit 220 may be configured to define the shape of the area for each of the divided areas. The map generation unit 220 may be configured to set attributes in the divided areas, and define the shapes of the areas according to the attributes per area.

The map generation unit 220 may be configured to first determine a main area based on the number of contact points with other areas, in each of the divided areas. The main area may be, basically, a living room, but the main area may be changed to any one of a plurality of rooms in some cases. The map generation unit 220 may be configured to set the attributes of the remaining areas based on the main area. For example, the map generation unit 220 may be configured to set an area of a certain size or more from areas positioned based on the living room, which is a main area, as a room, and set the other areas as other areas.

The map generation unit 220 may be configured to define the shapes of the areas so that each area may have a specific shape according to a criterion based on the attributes of the area. For example, the map generation unit 220 may be configured to define the shape of an area based on a typical family room type, e.g., a square. In addition, the map generation unit 220 may be configured to define the shape of an area by expanding the shape of the area based on the outermost cell of the basic map, and deleting or reducing the area that cannot be approached due to an obstacle.

In addition, depending on the size of the obstacle, in the basic map, the map generation unit 220 may be configured to display an obstacle having a certain size or larger on the map, and delete an obstacle less than a certain size from the corresponding cell so that the obstacle cannot be displayed on the map. For example, the map generating unit may be configured to display furniture such as a chair, a sofa, or the like having a certain size or more on a map, and delete a temporary obstacle, e.g., a small toy from the map. The map generation unit 220 may include the location of a charging stand 59 on the map when generating the map.

With respect to the detected obstacle after the map has been generated, the map generation unit 220 may be configured to add an obstacle to the map based on the obstacle information input from the obstacle recognition unit 21. The map generation unit 220 may be configured to add a specific obstacle to the map if the obstacle is repeatedly detected at a fixed location, and ignore the obstacle if the obstacle is temporarily detected.

The map generation unit 220 may be configured to generate both the user map, which is a map of a defined form, and the guide map, which is displayed by overlapping the user map and the cleaning map.

If the map generation unit 220 cannot determine the current location of the main body 10 by the location recognition unit 240, it may be configured to generate a new map of a cleaning area. The map generation unit 220 may be configured to determine that the main body 10 has moved to a new area and initialize a preset map.

The moving robot may be configured to perform the cleaning based on the cleaning map, and transmit the user map and the guide map to the mobile terminal. The mobile terminal 300 may be configured to store both the guide map and the user map, display them on the screen, and output one of them according to a setting or command. If a cleaning command based on the user map or the guide map is input from the mobile terminal 300, the moving robot 1 may be configured to travel based on the cleaning map and clean a designated area.

The location recognition unit 240 may be configured to determine the current location of the main body 10 based on the map (cleaning map, guide map, or user map) stored in the data unit.

If a cleaning command is input, the location recognition unit 240 may be configured to determine whether the location on the map is coincident with the current location of the main body 10. If the current location is not coincident with the location on the map or cannot be checked, the location recognition unit 240 may be configured to recognize the current location and restore the current location of the moving robot 1. If the current location is restored, the travel controller 230 may be configured to control the travel driving unit to move to a designated area based on the current location. A cleaning command may be input from a remote controller, the operation unit 160, or the mobile terminal 300.

If the current location is not coincident with the location on the map or cannot be checked, the location recognition unit 240 may be configured to analyze the acquisition image input from the image acquisition unit 140 and estimate the current location based on the map.

The location recognition unit 240 may be configured to process the acquisition images acquired at each location while the map generation unit 220 is generating the map, and recognize the whole area location of the main body in association with the map.

The location recognition unit 240 may be configured to determine the current location of the main body by comparing the map with the acquisition images obtained from each location on the map by using the acquisition images of the image acquisition unit 140, and thus the current location can be estimated and recognized even in a case where the location of the main body is suddenly changed.

The location recognition unit 240 may be configured to analyze various features included in the acquisition images, such as ceiling lights, edge, corner, blob, ridge, or the like, and then determine the location of the main body. The acquisition images may be input from the image acquisition unit or a second image acquisition unit disposed at an upper end of the main body.

The location recognition unit 240 may be configured to detect the features from each of the acquisition images. Various methods for detecting features from an image in the field of Computer Vision are well known. Several feature detectors suitable for detecting these features are known, such as Canny, Sobel, Harris&Stephens/Plessey, SUSAN, Shi&Tomasi, Level curve curvature, FAST, Laplacian of Gaussian, Difference of Gaussians, Determinant of Hessian, MSER, PCBR and Gray-level blobs detector, and the like.

The location recognition unit 240 may be configured to calculate a descriptor based on each feature point. The location recognition unit 240 may be configured to convert the feature points into a descriptor by using a Scale Invariant Feature Transform (SIFT) technique for feature detection. The descriptor may be denoted by an n-dimensional vector. SIFT may detect an unchanging feature with respect to the scale, rotation, and brightness change of an object to be photographed. Even if the moving robot 1 takes the same area at a different posture or location, the unchanging (Rotation-invariant) feature can be detected. Furthermore, the present invention is not limited thereto, and various other techniques (for example, HOG: Histogram of Oriented Gradient, Haar feature, Fems, Local Binary Pattern (LBP), and Modified Census Transform (MCT)) may be applied.

The location recognition unit 240 may be configured to classify at least one descriptor for each acquisition image into a plurality of groups according to a certain sub-classification rule, based on descriptor information acquired through the acquisition image of each location, and may convert the descriptors included in the same group into sub-representative descriptors respectively according to the sub-representative rule. For another example, it is also possible to classify all descriptors gathered from acquisition images in a certain area, such as a room, into a plurality of groups according to a certain sub-classification rule, and may convert the descriptors included in the same group into sub-representative descriptors respectively according to the sub-representative rule.

The location recognition unit 240 may be configured to obtain the feature distribution of each location through these processes. Each location feature distribution may be represented by a histogram or an n-dimensional vector. As another example, the location recognition unit 240 may be configured to estimate an unknown current location based on the descriptor calculated from each feature point, without going through the sub-classification rule and the sub-representative rule.

In addition, in a case where the current location of the moving robot 1 is in an unknown state due to a location leap or the like, the location recognition unit 240 may be configured to estimate the current location based on data such as a pre-stored descriptor, a sub-representative descriptor, or the like.

The location recognition unit 240 may be configured to acquire the acquisition image through the image acquisition unit 140 at an unknown current location, and detect features from the acquisition image, if various features, such as lights located on the ceiling, an edge, a corner, a blob, a ridge, etc., are checked through the image.

Location information (e.g., feature distribution of each location) to be compared in accordance with a certain sub-transformation rule and comparable information (sub-recognition feature distribution) may be converted, by the location recognition unit 240, based on at least one recognition descriptor information acquired through the acquisition image of an unknown current location. According to a certain sub-comparison rule, each location feature distribution may be compared with each recognition feature distribution to calculate each similarity. The similarity (probability) may be calculated per the above-mentioned location corresponding to each location, and a location where the greatest probability is calculated may be determined as the current location.

In a case where the map is updated by the map generation unit 220 during the traveling, the controller 200 may be configured to transmit the updated information to the mobile terminal 300 through the communication unit, and thus the map stored in the mobile terminal can be the same as that of the moving robot 1. Accordingly, as the maps stored in the mobile terminal 300 and the moving robot 1 are maintained to be the same, the moving robot 1 may clean the designated area in response to the cleaning command from the mobile terminal. In addition, the mobile terminal may display the current location of the moving robot on the map.

If a cleaning command is inputted from the operation unit 160 or the mobile terminal 300, the travel controller 230 may be configured to control the travel driving unit 250 by which the main body moves to the designated area of a cleaning area, cause a cleaning unit to perform cleaning operations which are performed together with the traveling.

When a command for cleaning of a plurality of areas is inputted, the travel controller 230 may be configured to control the travel driving unit 250 by which the main body moves to an area based on the setting of a priority area or a designated order, and thus the cleaning can be performed. In a case where a separate cleaning order is not specified, the travel controller 230 may be configured to cause the min body to move to, based on the current location, a near area or an adjacent area according to the distance and perform cleaning.

In addition, in a case where a cleaning command for an arbitrary area is input regardless of division of a cleaning area into multiple areas, the travel controller 230 may be configured to cause the min body to move to an area included in the arbitrary area and perform cleaning.

If the cleaning in a designated area set to be cleaned is completed, the controller 200 may be configured to store a cleaning record in the data unit. In addition, the controller 200 may be configured to transmit the operation state or the cleaning state of the moving robot 1 to the mobile terminal 300 through the communication unit 190 at certain intervals.

If a monitoring mode is set according to the operation unit 160 or the mobile terminal 300, the controller 200 may be configured to control the travel driving unit by which the main body 10 travels a cleaning area along a monitoring path set by the travel controller 230 based on a map of the cleaning area generated by the map generation unit. In addition, the controller 200 may be configured to analyze data input from a monitoring element, such as an obstacle sensing unit, a sensing unit, or the like during the traveling, determine a kind of the obstacle through the obstacle recognition unit, detect the movement of the obstacle, perform monitoring while patrolling a cleaning area, and detect whether intrusion is occurred or not.

In a case where a monitoring mode is set according to the operation unit 160 or the mobile terminal 300, the controller 200 may be configured to set the plurality of areas of a cleaning area or at least one selected area of the plurality of areas as a monitoring area, and then cause the monitoring area to be monitored. In addition, in a case where a monitoring location or a monitoring direction is set for a monitoring area, the controller 200 may be configured to cause the monitoring area to be monitored, in response to the setting.

The controller 200 may be configured to cause each monitoring area to be monitored for a plurality of monitoring areas while moving per area, according to a setting of a monitoring mode being input. In a case where a priority or a monitoring order is set for the monitoring areas, the controller 200 may be configured to cause the moving robot to move to a monitoring area dedicated based on the priority or monitoring order first and cause the dedicated monitoring area to be monitored, and after that, cause the other monitoring areas to be monitored.

In addition, in a case where a specific area of the plurality of areas is dedicated to a monitoring area, the controller 200 may be configured to cause the dedicated monitoring area to be monitored.

In a case where a monitoring location or a monitoring direction is set for a monitoring area, the controller 200 may be configured to cause an image in the monitoring direction at the set monitoring location to be taken. Since the controller 200 causes the travel driving unit at the monitoring location by which the main body to be rotated at a predetermined angle, thus, a shooting angle of the image acquisition unit 140 is headed toward the monitoring direction.

In a case where a separate monitoring direction is not set, the controller 200 may be configured to cause the main body to rotate at a predetermined angle in the monitoring direction and then stop, and cause the rotating and stopping to be repeated. The image acquisition unit 140 takes images while the main body stops. The controller 200 may be configured to cause the main body to repeatedly rotate and stop on a per-predetermined-rotating-angle basis to rotate 360 degrees in total.

In addition, the controller 200 may be configured to cause the main body to rotate at a low speed lower than or equal to a predetermined speed, and the image acquisition unit 140 to take images while the main body is rotating.

The controller 200 may be configured to generate monitoring data based on images being taken by the image acquisition unit 140. When the images are taken during the stopping of the main body while the main body repeatedly rotates and stops, the controller may be configured to generate monitoring data in a form of an image. Also, when the images are taken during the rotating of the main body, the controller may be configured to generate monitoring data in a form of a panorama image or a moving image.

The controller 200 may be configured to cause the monitoring data to be generated in a form of any one of a still image, a moving image, a panorama image, or the like, according to a setting of the operation unit or the mobile terminal. In addition, to generate the monitoring data in a form of any one of a still image, a moving image, a panorama image, or the like, the controller 200 may be configured to control the rotation operation of the main body at the monitoring location, as described above.

The controller 200 may be configured to generate the monitoring data based on images being taken by the image acquisition unit 140, and then transmit it to the mobile terminal 300 through the communication unit 270.

In addition, the controller 200 may be configured to analyze the monitoring data, determine a kind of an obstacle, and detect intrusion by detecting the movement of the obstacle. The controller 200 may be configured to recognize the obstacle through the obstacle recognition unit 210, determine a kind of an obstacle, and determine that intrusion has occurred if a new obstacle is detected or the movement of the obstacle is detected. That is, if a new obstacle which is not coincident with information of the obstacles included in a map is detected or the movement of the obstacle is detected, the controller 200 may be configured to determine that intrusion has occurred.

The controller 200 may be configured to output a predetermined alert sound, or transmit a message with respect to the intrusion detection to the mobile terminal or a stored or indicated security agency.

In a case where a specific time is set for performing of the monitoring, the controller 200 may be configured to wait until the designated time, and then travel the monitoring area when the designated time arrives and perform the monitoring. In addition, in a case where a schedule is set so that the monitoring is performed at predetermined time intervals, the controller 200 may be configured to cause the main body to monitor a cleaning area while traveling the monitoring area, according to the dedicated schedule.

Based on the data received from the moving robot 1, the mobile terminal 300 may be configured to display the location of the moving robot along with the map on the screen of the application being executed, and also output information on the cleaning state.

The mobile terminal 300 may be configured to display either the user map or the guide map on the screen according to a setting, and may change and then display the modified map through the setting. In addition, the mobile terminal may be configured to dedicate the location of a specific obstacle on the map, and information on the designated obstacle may be transmitted to the moving robot and added to a pre-stored map.

The mobile terminal 300 may be configured to designate a cleaning area corresponding to a key input or a touch input on the displayed map, set a cleaning order, and transmit a cleaning command to the moving robot.

In addition, the mobile terminal 300 may be configured to cause a monitoring command to be input in the moving robot 1, based on a map, in response to a key input or a touch input. The mobile terminal 300 may be configured to cause the moving robot 1 to be operated in a monitoring mode through the monitoring command.

In a case where the moving robot 1 is operated in the monitoring mode, the mobile terminal 300 may be configured to designate at least one area of a plurality of areas included in a map to a monitoring area, and set a monitoring path or a monitoring order between monitoring areas In addition, the mobile terminal 300 may be configured to set a specific location of the monitoring areas as a monitoring location, dedicate a monitoring direction in the monitoring location.

In addition, the mobile terminal 300 may be configured to set a schedule for the monitoring mode so that the monitoring is performed in a dedicated time.

The mobile terminal 300 may be configured to cause a monitoring command including at least one of a monitoring area, a monitoring location and a monitoring direction to be transmitted, and then display the monitoring data received from the moving robot 1 on the display screen. The mobile terminal may also be configured to receive the location information of the moving robot, and display it on the screen with the monitoring data.

The mobile terminal 300 may be configured to cause a controlling command for a certain operation to be input in moving robot 1 while the monitoring data is displaying on the screen. In addition, in response to the monitoring data being displayed, the mobile terminal 300 may be configured to set the location of the main body 10 to be changed, and set a monitoring direction to be changed.

If a warning message or a signal with respect to an intrusion detection is received, the mobile terminal 300 may be configured to display, perform, or output a warning message, notice, or sound on the screen or through the moving robot 1. In addition, the mobile terminal may be configured to transmit a message with respect to the intrusion detection to a stored or indicated security agency.

In even a case where warning is not informed from the moving robot 1, if a key input or a touch input is performed while the monitoring data is displaying on the screen, the mobile terminal 300 may be configured to determine that intrusion detection by a user has occurred, and then transmit a message with respect to the intrusion detection to a stored or indicated security agency.

The mobile terminal 300 may be configured to cause the monitoring data received from the moving robot to be accumulated and stored by date and time, and if any one of the stored data is selected, replay the selected monitoring data, and display it on the screen. In some cases, the mobile terminal 300 may be configured to cause the monitoring data to be stored in a built-in or external memory, or a server or a storage apparatus connected to each other through a communication network.

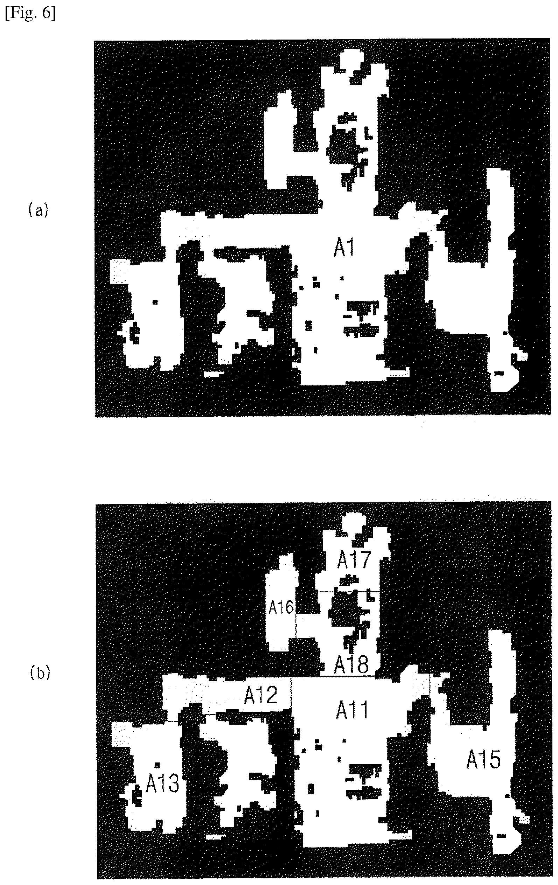

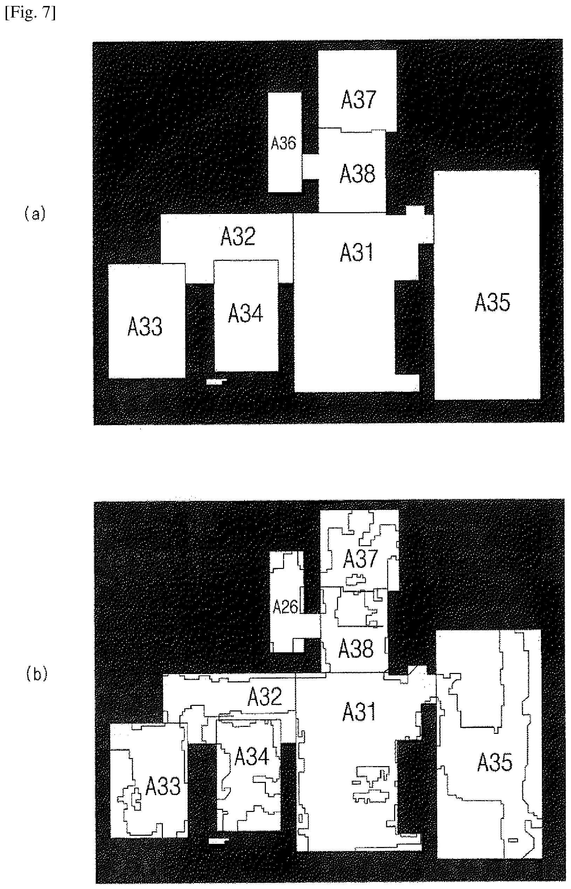

FIGS. 6 and 7 are views for illustrating methods of generating maps of the moving robot according to an embodiment.

As shown in FIG. 6, when a map is not stored, or an initial operation is performed, the moving robot 1 may travel in a cleaning area through wall following or the like, and then generate a map. In addition, the moving robot 1 may clean a cleaning area without a map, and generate a map through acquired obstacle information.

As shown in FIG. 6A, during the traveling, the map generation unit 220 may be configured to generate a map, based on the map data being input from the obstacle sensing unit 100 and the sensing unit 150 and the obstacle information from the obstacle recognition unit 210.

The map generation unit 220 may be configured to generate a basic map A1 composed of an outline of a cleaning area through wall following. Since the basic map is made in the form of an outline of the entire area, the area is not divided.

As shown in FIG. 6B, the map generation unit 220 may be configured to divide the basic map A1 into a plurality of areas A11 to A17, and generate a cleaning map, i.e., a map in which the area is divided.

The map generation unit 220 may be configured to separate small areas of a certain size or smaller from the base map A1 and set a representative area of a certain size or larger. The map generation unit 220 may be configured to set the representative area by separating the small areas by the erosion and dilation of the basic map through morphology operation. The map generation unit 220 may be configured to set a certain type of constituent element to the image to be processed, i.e., a basic map, perform an erosion operation by completely including the constituent element in the area of the image, and may perform a dilation operation by including a part of the constituent element in the area of the image. According to a setting of the constituent element as well as the image area, the form of erosion and dilation may be changed.

The map generation unit 220 may be configured to set a detail area for the remaining small areas subtracting the representative area. Since the detail area is an area connecting the representative area or an area attached to the representative area, the map generation part 220 may be configured to reset the area by merging each detail area into any one representative area. The map generation unit 220 may be configured to merge the detail area into any one representative area, based on the association such as the connection with each representative area, the number of connection point (node), distance, and the like. In addition, in a case where the detail area B is a certain size or larger, the map generation unit 220 may be configured to set the detail area as a separate area.

Accordingly, the map generation unit 220 may be configured to merge the detail area into the representative area, and thus generate a clean map in which the area is divided.

The map generation unit 220 may be configured to divide an area in such a way that a plurality of small areas composing the area are divided into at least one representative area and at least one detailed area, and the detail area is merged into the representative area, and then set a main area, a room, and other areas according to the number of contact points where each representative area contacts with other areas and/or the size of the area. In a preferred embodiment, a living room is set as the main area.

In addition, the map generation unit 220 may be configured to set attributes of a plurality of areas, based on the main area. The map generation unit 220 may be configured to set the remaining areas except for the main area as a room or other areas according to its size or shape.

As shown in FIG. 7(a), the map generation unit 220 may be configured to generate a cleaning map, and then define the shapes of areas in a manner that the user can easily recognize each area. The map generation unit 220 may be configured to simplify the shapes of areas, arrange a small area or an obstacle, and expand or delete an area. The map generation unit 220 may be configured to define the shapes of areas in a certain shape according to the attributes of the area. For example, the map generation unit 220 may be configured to define a room into a square shape.

The map generation unit 220 may be configured to generate a user map by defining the shapes of the areas from the cleaning map. The map generation unit 220 may be configured to define the map in a specific shape according to the attributes of areas, and modify the shapes of the areas according to the size of the obstacle.

In a case where an obstacle is positioned in an area, based on the outermost line, the map generation unit 220 may be configured to define the shape of the area and change the area of the corresponding map in a manner that the obstacle can be included in the area. In addition, in a case where an obstacle has a certain size or larger, and the corresponding area is any area which the moving robot cannot approach due to the obstacle, the map generation unit 220 may be configured to reduce or delete the area to change the area of the corresponding map. Further, if an obstacle is a certain size or larger, the map generation unit 220 may be configured to display the obstacle on the corresponding map, and may delete the obstacle from the map if the obstacle is smaller than a certain size.

The map generation unit 220 may be configured to define the shape of an area on a different standard according to attributes of the area. In a case where an area is a room, the map generation unit 220 may be configured to define the shape of the area into a rectangular shape. Since a plurality of obstacles exist in the living room which is a main area, the map generation unit 220 may be configured to define an outline in the form of a polygon and the shape of the area corresponding to a small obstacle. The map generation unit 220 may be configured to define the shape of the area in a manner that the outline of the area is defined as a straight line in consideration of the size of an obstacle.

The map generation unit 220 may be configured to define the shape of an area, and then generate a user map having a plurality of areas A31 to A37 by applying a visual effect.

In the user map, a plurality of areas may be displayed in different colors, and the name of each area may be displayed. In the user map, the area of the same attributes may be displayed in the same color according to the attributes of the area. In addition, information on a specific obstacle may be displayed in the user map in the form of an image, an icon, an emoticon, a special character, and the like.

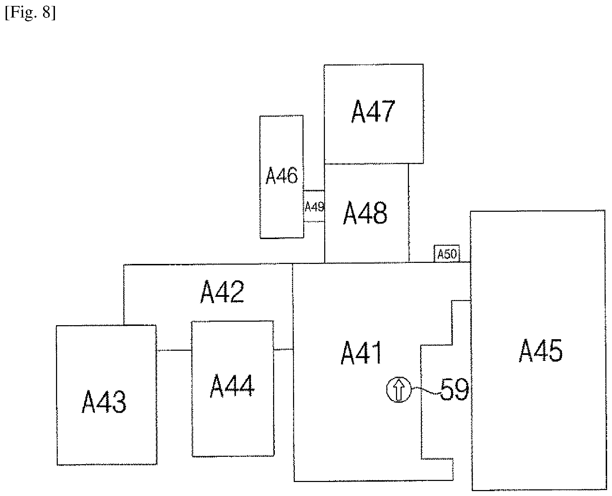

In addition, the map generation unit 220 may be configured to set the plurality of areas A31 to A37 of the user map to have a specific shape according to the attributes of the area, subdivide one area and set other areas as shown in FIG. 8.

As shown in FIG. 7B, the map generation unit 220 may be configured to generate a guide map, including a plurality of areas A21 to A27, in which the cleaning map and the user map are overlapped and displayed. The guide map may be displayed in a state where a small obstacle of the cleaning map is removed.

The moving robot 1 may store one or more generated maps, i.e., the cleaning map, the guide map, and the user map in the data unit 280, and transmit the user map and the guide map to an external device such as a remote controller, a mobile terminal 300, a controller, and the like.

FIG. 8 is a view illustrating an example map generated in the moving robot according to an embodiment.

The mobile terminal 300 may be configured to implement a program or application for controlling the moving robot 1, and as shown in FIG. 8, display a map, such as a user map stored through receiving from the moving robot 1 on the display screen. The mobile terminal 300 may be configured to display a guide map as well as the user map according to a presetting.

In the user map or guide map, each of a plurality of divided areas A41 to A50 may be differently displayed on a screen, and the color or name of each area may be displayed according to the attributes of each area. In addition, the attributes of an area may be displayed on the map, and the area of the same attributes may be displayed in the same color. The user map as illustrated in FIG. 8 may include other areas A49, A50 additionally defined by subdividing the area as in FIG. 7 (a) described above, and at least one area may be modified by the mobile terminal 300.

The mobile terminal 300 may be configured to display the location of an obstacle on a map, such as a user map or a guide map, and at least one of an image, an icon, an emoticon, a special character of the obstacle, according to the kind of an obstacle, on the screen.

If a cleaning command is input, the mobile terminal 300 in which a user map or the guide map may be displayed may be configured to transmit information associated with the received cleaning command to the moving robot 1, and then the moving robot 1 may be configured to move to a dedicated area based on the received information and perform cleaning according to a cleaning map. The moving robot 1 may be configured to reflect the cleaning command being input which is based on the user map or guide map on the cleaning map, thereby determine the dedicated area.

In addition, the mobile terminal 300 may be configured to set a monitoring area, a monitoring location and/or a monitoring direction based on the user map or guide map which has been displayed on the screen, and input a monitoring command. As results of this, the mobile terminal 300 may be configured to set a monitoring mode at the moving robot 1.

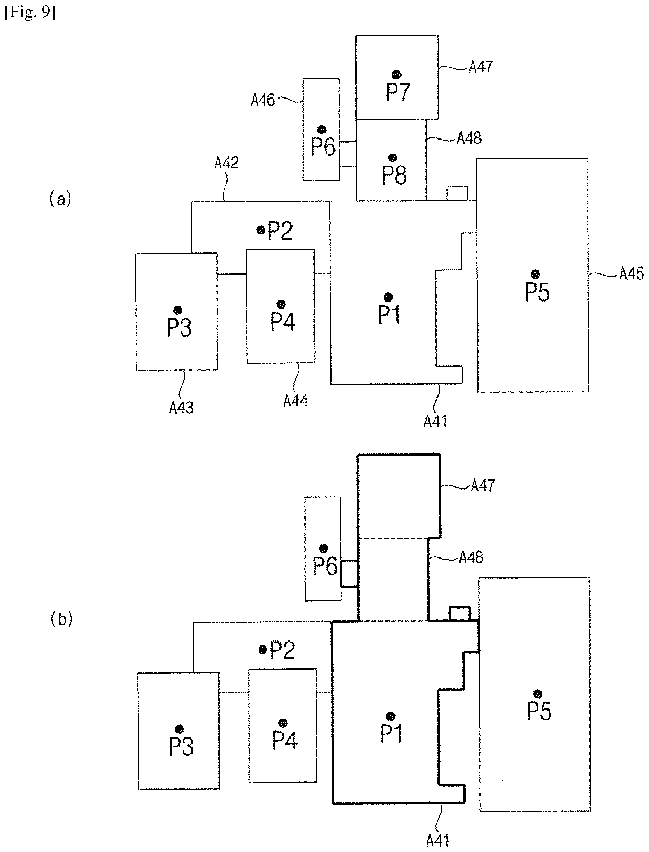

FIG. 9 is views illustrating monitoring locations of the moving robot according to an embodiment.

As shown in FIG. 9 (a), if a monitoring mode is set, the moving robot may be configured to move to a plurality of areas of a cleaning area, and perform a monitoring operation.

A travel controller 230 may be configured to set a monitoring area for a plurality of areas A41 to A48, and set a monitoring location for the monitoring area.

The travel controller 230 may be configured to set the center point calculated from each monitoring area based on the map which has divided areas as the monitoring location, and cause a travel driving unit to perform monitoring of the monitoring area at the monitoring location.

When generating a map, the map generation unit may be configured to match a cleaning area to a map, and store the coordinate values for each point in the cleaning area. A traveling controller may be configured to calculate the center point of an area based on the coordinate values. The traveling controller, with regard to a plurality of points in an area, may be configured to multiply the distance from the point to the left outline by the distance to the right outline, multiply the distance from the point to the outline, and then calculate the center point which corresponds to a point at which the sum of the two multiplied values becomes the maximum value can be calculated. Meanwhile, in a case where a separate coordinate value is not stored, the traveling controller may be configured to calculate the center point which corresponds to the center point obtained by connecting each point on the outline that represents a travelable area in an area. For example, the traveling controller may be configured to extract the midpoints of line segments of a certain length or larger of the outline of the area, and connect the midpoints of the opposite line segments, so that the center point of the area can be extracted. In addition, when generating a map, the map generation unit may be configured to extract a center point which corresponds to the center of the remaining area resulted from minimizing of the size of the area while scaling down the size of the area to distinguish the area, and store information on the center point or update the map to include the center point. The traveling controller may be configured to set a monitoring location based on information on the center point.

As a result of this, the traveling controller may be configured to set the center point of each monitoring area as a monitoring location.

The travel controller 230 may be configured to set points P1 to P8 for areas A41 to A48 as the center points of areas, which are also set as basic monitoring locations, and then a monitoring operation is performed.

In addition to the basic monitoring locations, if additional locations are dedicated, the travel controller 230 may be configured to set a plurality of monitoring locations within one area to perform monitoring.

In a case where a specific location is dedicated to a monitoring location per monitoring area through the operation unit 160 or the mobile terminal 300, the travel controller 230 may be configured to set the dedicated location as the monitoring location to perform monitoring.

For example, the moving robot 1 may be configured to move from a forty first area A 41 to a first point P1 and monitor the forth first area, and then move to a next area. For example, the moving robot 1 may be configured to move to a second point P2 of a forty second area P42 and monitor the forty second area. The moving robot 1 may be configured to move to the nearest area based on the current location, and in a case where an order or priority is dedicated with reference to the areas, move to monitoring areas in a dedicated order, and perform monitoring.

The moving robot 1 may be configured to take images of a monitoring area at a monitoring location through the image acquisition unit, and generate monitoring data from the taken images. Also, the moving robot 1 may be configured to detect kinds or movements of obstacles in the monitoring area based on the monitoring data.

In addition, as shown in FIG. 9(b), in a case where although an area is divided, but the area is actually open, the travel controller 230 may be configured to recognize the area as one area in a monitoring mode, and set the monitoring location in a manner that a plurality of areas at the one area are monitored. In this case, if an area is an open space, the moving robot 1 may be configured to perform monitoring in the center of the area through a rotating operation. Although an obstacle is positioned in an area, but a blind spot is not formed, the moving robot 1 may be configured to detect a charging stand by rotating in the center of the area.

For example, although a forth first area A41, forty seventh area A47, and forth eighth area A48 are recognized as living room, dining room and kitchen respectively, but these may not have a separate door, and be substantially open space. Since it is possible to take images from the forth first area A41, forty seventh area A47, and forth eighth area A48, the moving robot 1 may be configured to monitor the forty seventh area A47 and forth eighth area A48 at the first point P1, without moving to the forty seventh area A47 and forth eighth area A48.

Although the first point is the center point of the forty first area A41, but includes both the forty seventh area A47 and forth eighth area A48, therefore it may not be a center point in fact. In this case, the travel controller 230 may be configured to change the monitoring location.

In addition, in a case where it is not possible to monitor the forty seventh area A47 at the first point P1, the travel controller 230 may be configured to monitor each area based on the divided areas. In some cases, a separate monitoring may be performed on the forty first area A41, and then the forty seventh area A47 and forth eighth area A48 may be merged and the monitoring location may be set so that monitoring is performed at the forth eighth area A48.

The moving robot 1 may be configured to set a location being input from a mobile terminal 300, a remote controller or operation unit 160as as the monitoring location, and change the monitoring location or additionally set a monitoring location based on a shape of space. In addition, the moving robot 1 may be configured to set a plurality of monitoring locations according to a monitoring scope or whether an obstacle is positioned.

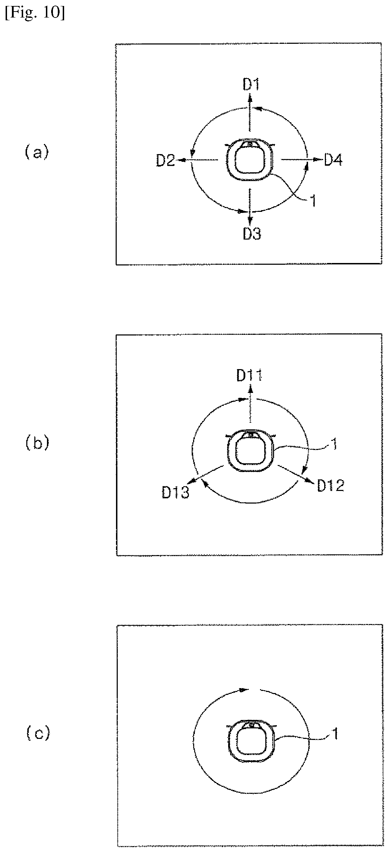

FIG. 10 is views illustrating monitoring methods of the moving robot per area according to an embodiment.

As shown in FIG. 10, when the moving robot sets the monitoring mode, it may perform a monitoring operation while moving to a plurality of areas.

When the moving robot 1 movies to any one monitoring area, as described above, it may be configured to monitor an area at the center point of a monitoring area. Although the center point of an area may be regarded as a basic monitoring location, but if a separate specific location is dedicated, the dedicated location is set as a monitoring location and the moving robot 1 may monitor the monitoring area.

The moving robot 1 may be configured to move to a dedicated area in an area, such as a basic monitoring location or dedicated monitoring location, and then take images in the area by rotating at the monitoring location. The image acquisition unit 140 may be configured to take images at the monitoring location, and input the taken images into moving robot 1. The controller 200 may be configured to generate monitoring data in the form of at least one of a still image, moving image or panorama image.

As shown in FIG. 10(a), if the main body 10 reaches the monitoring location, the travel controller 230 may be configured to cause the main body 10 to rotate 90 degrees at the current location, and then stops for a predetermined time and rotates again four times to perform 360-degree rotation. In this case, the image acquisition unit 140 may be configured to take images in all four directions D1 to D4 while the main body is stopped.

In addition, as shown FIG. 10 (b), if the main body 10 reaches the monitoring location, the travel controller 230 may be configured to cause the travel driving unit to allow the main body 10 to rotate three times in 120 degrees and thus 360 degrees in total, and therefore the image acquisition unit 140 may take images in all three directions D11 to D13.

The rotating angle at which the moving robot 1 rotates once may be determined depending on the angle of view of a camera of the image acquisition unit 140. Although it has been described that the rotation is in the range of 90 degrees to 120 degrees, in some cases, it is possible to rotate per 180 degrees, and it is also possible to rotate per 45 degrees or per 60 degrees. In a case where a shooting angle or shooting direction is designated, the moving robot 1 may be configured to rotate according to the designated direction to take image in the area.

The controller 200 may be configured to generate monitoring data in the form of an image in each direction at a monitoring location based on images.

Meanwhile, as shown in FIG. 10(c), the travel controller 230 may be configured to cause the main body 10 to rotate 360 degrees continuously at the monitoring location. The image acquisition unit 140 may be configured to take images continuously while the main body is rotating. The travel controller 230 may be configured to cause the travel driving unit 250 to allow the main body 10 to rotate 360 degrees at a low speed of a certain speed or lower. Thus, the controller 200 may generate monitoring data in the form of a moving image or panorama image.

The image acquisition unit 140 may input the taken images into the moving robot, and then an obstacle recognition unit may detect and recognize the images by analyzing the images. In addition, the controller may be configured to generate monitoring data from input images, transmit the monitoring data or data in connection with the images to a dedicated mobile terminal. The controller may be configured to store the monitoring data in a data unit, or transmit it to an external storage or server.

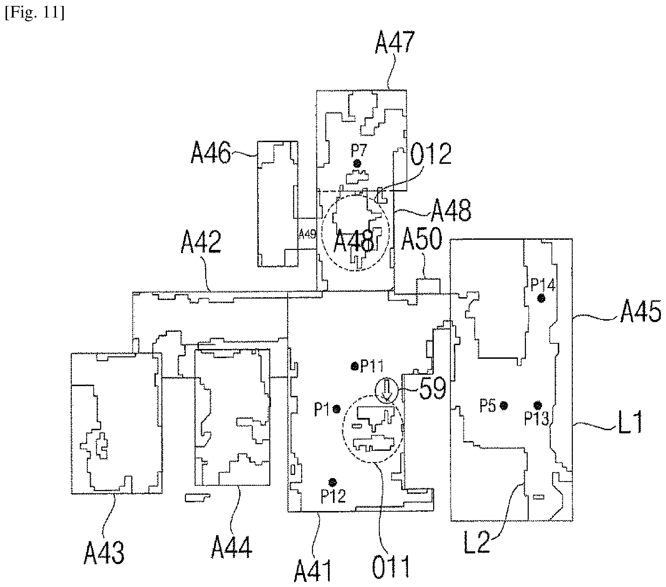

FIG. 11 is a view illustrating setting of monitoring locations of the moving robot according to another embodiment.

As shown in FIG. 11, the travel controller 230 may be configured to set a plurality of monitoring locations in at least one monitoring area. As described above, the travel controller 230 may be configured to take images at a center point which is a basic monitoring location. In a case where a blind spot is formed due to an obstacle or due to the shape of a monitoring area while taking images, the travel controller 230 may be configured to change the monitoring location or add a monitoring location according to the location of the obstacle or the shape of the area.

For example, in a case where images at the first point P1 in the forty first area A41 are taken, it is possible that a portion of the area could not be taken due to a first obstacle O11.

Because of this, the travel controller 230 may be configured to add a twelfth point P12 as a monitoring location, considering the location of the obstacle. The moving robot 1 may be configured to monitor the forth first area at the first point P1 and the twelfth point P12.

Meanwhile, since the forth eighth area A48 is an open space connected to the forty first area, the travel controller 230 may be configured to monitor the forth eighth area at the first point P1 without setting of a monitoring location to the forth eighth area A48 separately.

In this case, since the first point P1 is the center point of the forty first area, and it is not a center point resulted from adding of the forty first area and the forty eighth 48 area, therefore, a eleventh point of a new center point may be added as a monitoring location, considering both the forty first area 41 and the forty eighth 48 area, and the first point P1 may be excluded from the monitoring location.

Meanwhile, since the forth seventh area is also an open space, although the travel controller 230 may perform monitoring by merging of the forth seventh area without setting of a separate monitoring location, but a blind spot is formed due to a second obstacle 012. Therefore, the travel controller 230 may set a seventh point as a monitoring location.

In addition, with respect to a forty fifth area A45, there places an area in which the travel controller 230 cannot travel due to an obstacle in the area, that is it cannot travel in the actual size of the area. Therefore, the travel controller 230 may be configured to set a plurality of monitoring locations by adding a thirteenth point P13 or a fourteenth point P14 to the fifth point P5, according to the shape of the area based on a travelable area L2.

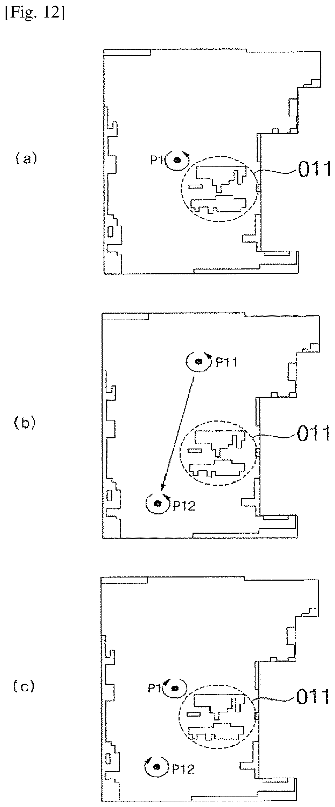

FIG. 12 is views illustrating moving methods of the moving robot according to the monitoring locations of FIG. 11.

As described above, the moving robot 1 may be configured to add a monitoring location according to the location of an obstacle, and thus perform monitoring at a plurality of monitoring locations.

As shown in FIG. 12(a), the travel controller 230 may be configured to set the first point P1 which is a center point as a basic monitoring location, in the forty first area A41. If reaches the first point P1, the moving robot 1 may be configured to take images of the forty first area by rotating at a predetermined angle.

Since there places an eleventh obstacle O11 in the forty first area A41, when the moving robot 1 take images, there is possibility that a blind spot can be formed due to the obstacle, and thus taking of images of an area to be monitored or taking of images at a monitoring direction could not be effectively performed.

Therefore, the travel controller 230 may set a plurality of monitoring locations, and monitor at least one monitoring area.

The travel controller 230 may be configured to add a monitoring location according to the location of an obstacle or the shape of an area, and in addition, determine whether to add a monitoring location based on a determined result on the obstacle presence from the acquired image by the obstacle recognition unit 210.

The travel controller 230, as shown in FIG. 12(b), may be configured to add a twelfth point P12 as a monitoring location in response to the presence of the eleventh obstacle O11, and takes images at the first and twelfth points.

As shown in FIG. 12(c), in a case where a plurality of monitoring locations is set, the travel controller 230 may be configured to set the eleventh and twelfth points P11 and P12 except for the first point which is the center of the area as a monitoring location, considering distance between locations. The travel controller 230 may be configured to divide the forty first area into two areas, centering on the position of the eleventh obstacle, and set the eleventh and twelfth points as the monitoring locations for each area.

As described above, in a case where an open area among adjacent areas is positioned, the travel controller 230 may be configured to set a new monitoring location, considering the distance from the area.

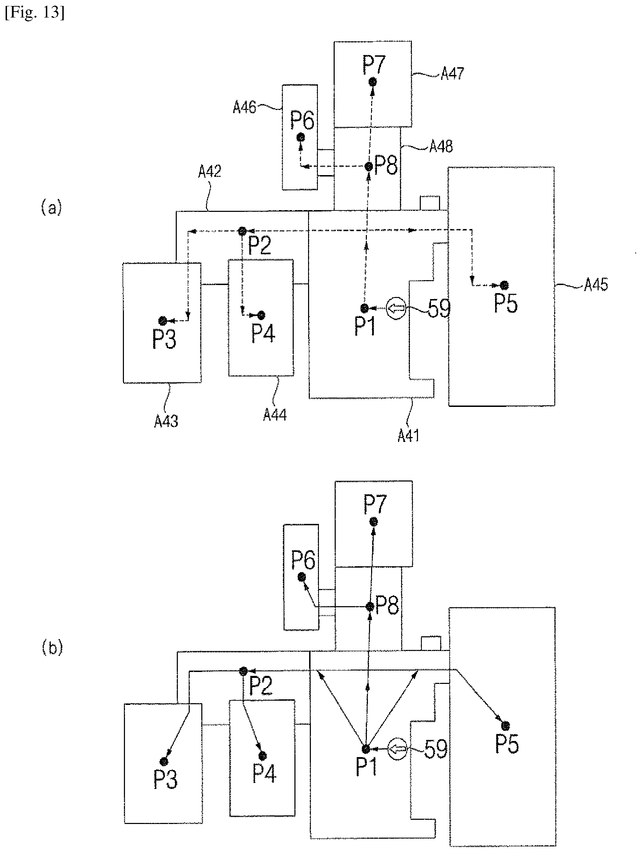

FIG. 13 is views illustrating moving methods in monitoring modes of the moving robot according to an embodiment.

As shown in FIG. 13, the moving robot 1, with respect to a cleaning area, may be configured to set the center points of each monitoring area as monitoring locations, and monitor the cleaning area while moving between the monitoring areas.

If a monitoring mode is set, the travel controller 230 may be configured to connect the center points of areas which are basic monitoring location areas to one another, set monitoring paths, and control operations of the travel driving unit. In a case where a monitoring location is dedicated, the travel controller 230 may be configured to set monitoring paths to connect the dedicated monitoring locations to one another.

As shown in FIG. 13(a), it is possible that a monitoring path may be set in a manner that each of the monitoring locations P1 to P8 is connected to a plurality of areas A41 to A48. The travel controller 230 may be configured to cause the main body 10 to travel in a straight line, but make a 90-degree turn according to paths.

The main body 10 may be configured to perform monitoring while moving from a charging stand 59 to the first point P1, moving to a second point P2, third point P3, fourth point P4, and then sequentially moving to a fifth point P5, a sixth point to eighth point P6 to P8. The moving order can be changed according to an order dedicated, or the priority of an area.

In a case where an obstacle is present in a monitoring path, the travel controller 230 may be configured to change the monitoring path to bypass the obstacle.

In addition, as shown in FIG. 13(b), the travel controller 230 may be configured to set monitoring paths which connects a plurality of monitoring locations to one another, but the monitoring paths may be set in a manner that the main body can move at the shortest distance between the points in the area.

For example, if the moving robot 1 moves from the first point P1 of the forty first area P41 to the second point P2 of the forty second area A42, it may be configured to travel diagonally in a straight line to the point where the forty first area P41 and the forty second area A42 are in contact with each other, and if moving from the forty second area A42 to the forth fifth area A45, travel in a straight line from the second point P2 to the forty fifth area, and then, if reaches the forth fifth area A45, take a turn and travel diagonally to the fifth point P5.

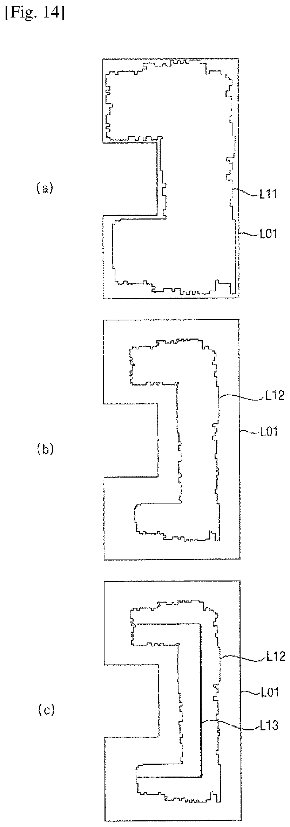

FIG. 14 is views illustrating monitoring locations and moving paths of the moving robot according to an embodiment.

As shown in FIG. 14, in a case where the travel controller 230 sets monitoring paths for connecting monitoring locations to one another, it may be configured to set monitoring paths based on the shapes of the monitoring paths.

As shown in FIG. 14(a), in a case where the travel controller 230 sets a monitoring path for any one area L01, it may be configured to analyze the shape of the areas based on the map of the area L01.

The travel controller 230 may be configured to analyze the shape of the area L01 based on a map L11, perform a thinning operation, and extract a line representing the shape of the area. In this case, the thinning operation is to extract line information from a figure having a thickness. That is, it is to extract line information according to the shape of the figure by finely manipulating the thickness of the figure and processing it to a certain thickness or less.

As shown in FIG. 14(b), the travel controller 230 may be configured to perform the thinning operation by repeatedly thinning the outline of the area based on the map L11 of an area. If the thickness of the map of the area decreases L12 and the thickness decreases to a certain value or less and then changes from a graphic form to a line form, the travel controller 230 may extract a first line L13, as shown in FIG. 14(c).

The travel controller 230 may be configured to set a monitoring path based on the extracted line L13. In some cases, the travel controller 230 may be configured to set a monitoring path based on the shape of an area first, and then set any one point of the path as a monitoring location. The travel controller 230 may be configured to change the location of the monitoring path based on the monitoring location, if the monitoring location is not coincident with the monitoring path.

Thus, by setting a monitoring location of each area and setting a monitoring path according to the set monitoring location, when a monitoring mode is set, the controller 200 may be configured to generate monitoring data from image being taken while moving to a dedicated monitoring path and images being taken at the monitoring location, and then detect intrusion through the monitoring data.

The controller 200 may be configured to transmit the monitoring data to an external server or a mobile terminal. In addition, in a case where intrusion is monitored based on a result analyzed from the monitoring data, the controller 200 may be configured to output an alert message or notice, and transmit a warning message or a related signal to a server or a mobile terminal. In addition, the controller 200 may be configured to transmit a message with regard to intrusion detection to a stored or dedicated security agency.

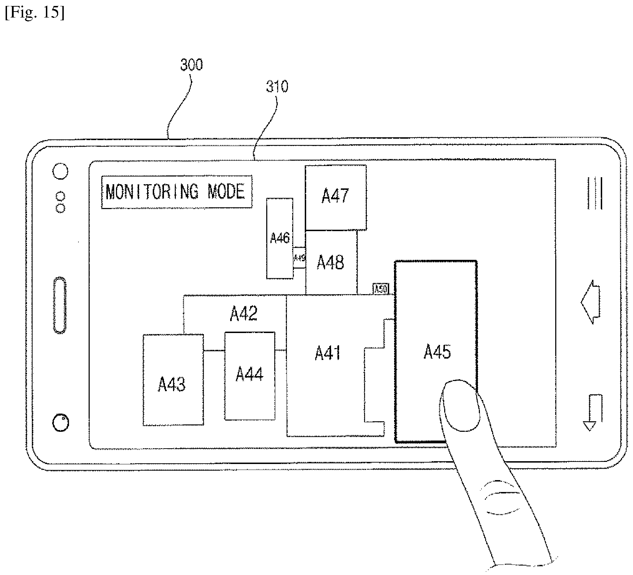

FIG. 15 is a view illustrating a control screen of a mobile terminal for controlling the moving robot according to an embodiment.

As shown in FIG. 15, the mobile terminal 300 may be configured to display a map of a cleaning area on the display screen 310, and control the moving robot through the map. The mobile terminal 300 may be configured to select at least one area of a plurality of areas and input a cleaning command into the moving robot. Also, the mobile terminal 300 may be configured to set a monitoring area, transmit a monitoring command to the moving robot, and cause the moving robot to monitor a dedicated monitoring area.

The mobile terminal 300 may be configured to dedicate a monitoring area on a map in which a plurality of areas is separately displayed. Without dedicating a separate area, if the monitoring mode is set, the moving robot may be configured to set all areas as the monitoring area, and perform a monitoring operation.

The mobile terminal 300 may be configured to set at least one area of a plurality of areas as a monitoring area in response to a key input or a touch input, and transmit a monitoring command to the moving robot. For example, if the forth fifth area A45 is selected through a touch input, a monitoring mode in which the forth fifth area A45 is allocated as the monitoring area may be set in the moving robot.

In addition, the mobile terminal 300 may be configured to select a plurality of areas as the monitoring area in addition to the forth fifth area A45, and set a monitoring mode for the selected monitoring area, and then transmit a monitoring command to the moving robot 1.

When the mobile terminal 300 sets a monitoring mode, it may be configured to set the time in which the moving robot 1 travels a cleaning area and performs monitoring. In addition, the mobile terminal 300 may be configured to set a schedule for the moving robot 1 to monitor a cleaning area at a predetermined time, a predetermined number of times, a predetermined time period, or the like.

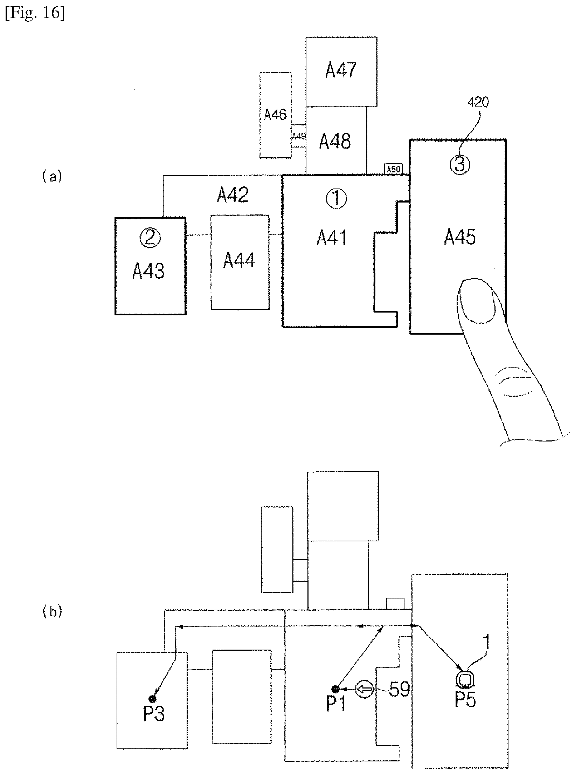

FIG. 16 is views illustrating a method of setting manually monitoring areas of the moving robot according to an embodiment.

As shown in FIG. 16(a), the mobile terminal 300 may be configured to set a monitoring mode for a plurality of areas in response to a key input or a touch input.

The mobile terminal 300 may be configured to display the selected area differently from other areas. The mobile terminal 300 may be configured to display differently the outline of the selected area or display the selected area in a specific color on the display screen.

For example, if a forty first area A41, a forty third area A43, a forty fifth area A45 are selected, the mobile terminal 300 may be configured to display the forty first area A41, the forty third area A43, the forty fifth area A45 differently from other areas. The mobile terminal 300 may be configured to display the selected areas in bold lines.

In a case where the mobile terminal 300 sets a monitoring mode for the selected plurality of areas, it may be configured to dedicate a monitoring order 420 according to the order selected. The mobile terminal 300 may be configured to display the monitoring order 420 of each area per area depending on the selected order. In this case, the monitoring order may be displayed in numbers, and in some cases letters, roman letters, emoticons or icons representing the order can be displayed.

For example, in a case where a forty first area A41, a forty third area A43, a forty fifth area A45 are selected, the mobile terminal 300, according to the selected order, may be configured to display the numbers of 1, 2, and 3 in the forty first area A41 which is the first rank, the forty third area A43 which is the second rank, and the forty fifth area A45 which is the third rank.

If a monitoring area is dedicated and a monitoring mode is set, the mobile terminal 300 may be configured to transmit data related to the monitoring mode along with information on the dedicated area to the moving robot 1, and then the moving robot 1 may set the monitoring mode for the dedicated area based on the received data, and perform monitoring.

As shown in FIG. 16(b), since the monitoring mode has been set, the moving robot 1 may be configured to set a monitoring location and a monitoring path in the dedicated area, that is, the forty first area A41, the forty third area A43, the forty fifth area A45. The moving robot 1 may be configured to take images at the monitoring locations per area while sequentially moving to the forty first area A41, the forty third area A43, the forty fifth area A45 according to the monitoring path, and monitor whether intrusion is occurred. The moving robot 1 may be configured to set the center point of the area as a basic monitoring location. As described above, the moving robot 1 may be configured to change the monitoring location or add a new monitoring location according to whether an obstacle is positioned, or a blind spot is formed in the area.

The moving robot 1 may be configured to transmit the location of the main body 10 while traveling and taken images to the mobile terminal. The mobile terminal 300 may be configured to display the current location of the moving robot 1 along with a monitoring path on a map, according to the received data.

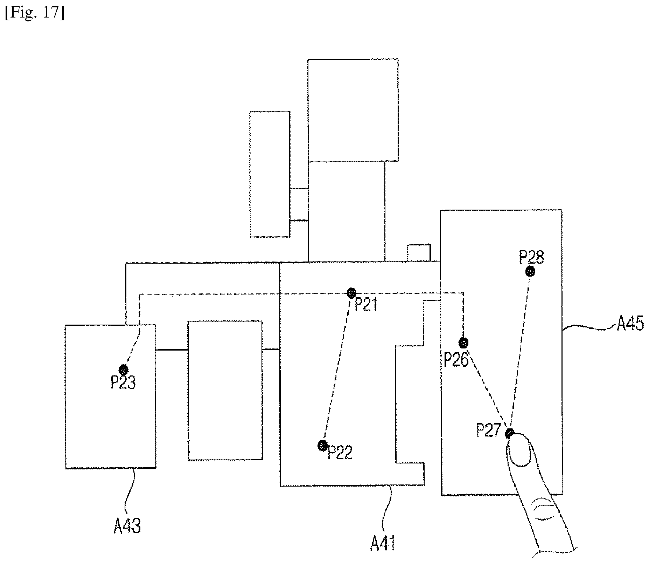

FIG. 17 is a view illustrating a method of setting manually monitoring locations of the moving robot according to an embodiment.

As shown in FIG. 17, the mobile terminal 300 may be configured to dedicate a monitoring location along with a monitoring area based on a map of a cleaning area displayed on the screen.

The moving robot 1 may be configured to automatically set a basic monitoring location, but if a monitoring mode is set by dedicating of the monitoring location from the mobile terminal 300, may perform monitoring while moving to the dedicated monitoring locations.

If the forty first area A41, the forty third area A43, the forty fifth area A45 from the forty first to forty eighth areas A41 to A48 are selected in response to a key input or touch input, the mobile terminal 300 may be configured to set a monitoring mode in which monitoring is performed of such areas. In addition, the mobile terminal 300 may be configured to set the twenty first to twenty eighth points P21 to P28 as the monitoring locations, for the selected forty first area A41, forty third area A43, forty fifth area A45, in response to a key input or touch input.

If the mobile terminal 300 dedicates the monitoring location without selecting a separate area, it may be configured to automatically set an area in which the monitoring location is set as a monitoring area.

The mobile terminal 300 may be configured to set the order (priority) for multiple monitoring locations.

The mobile terminal 300 may be configured to transmit a selected area and data of a dedicated location along with a monitoring command to the moving robot 1.

The controller 200 of the moving robot 1 may be configured to set a monitoring path based on the selected area and the monitoring location in response to the monitoring command received from the mobile terminal 300, and set a monitoring mode.

The travel controller 230 may be configured to set a monitoring path connecting monitoring locations to one another and cause travel driving unit (250) to allow the main body 10 to move. When the main body 10 travels in the monitoring mode, the image acquisition unit 140 may be configured to take images while traveling and input the taken images, and also take images at the monitoring location and input the taken images. The image acquisition unit 140 may be configured to take images at the monitoring location while repeatedly rotating and stopping at a predetermined rotation angle or continuously rotating, as described above.

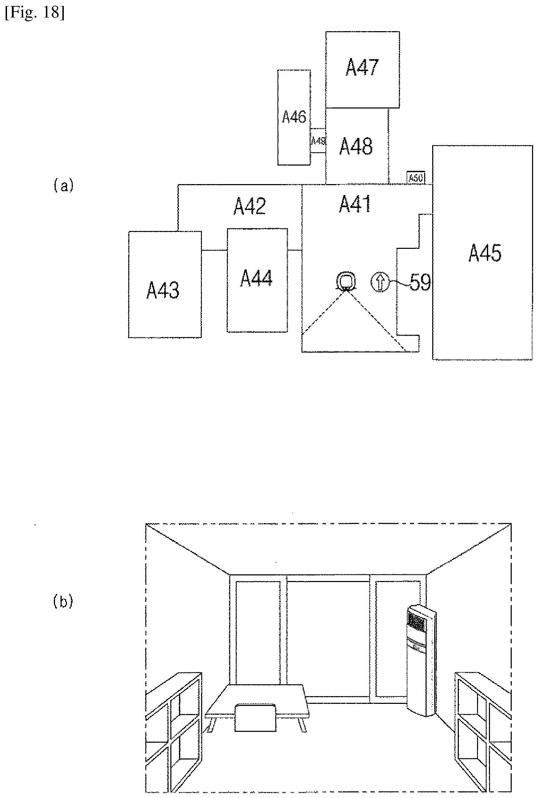

FIG. 18 is example views illustrating a monitoring screen of a mobile terminal according to an embodiment.

As shown in FIG. 18(a), when the moving robot 1 sets a monitoring mode, it may be configured to take images of a monitoring area at a dedicated monitoring location while traveling along a dedicated monitoring path, and detect whether intrusion is occurred. In addition, when the moving robot 1 sets a monitoring mode, it may be configured to generate monitoring data from images taken while traveling, and transmit it to the mobile terminal.

The moving robot 1 may be configured to calculate the current location of the main body 10, and transmit information on a direction in which images has been taken along with location information to the mobile terminal. Thus, the mobile terminal 300 may be configured to display the current location of the moving robot 1 on a map, and display a shooting direction on the map, or display screen.

The moving robot 1 may be configured to take images of an area at a monitoring location through the image acquisition unit 140, and generate monitoring data, and transmit it the mobile terminal 300.

Thus, as shown in FIG. 18(b), the mobile terminal 300 may be configured to display monitoring data received from the moving robot 1 on the display screen. The monitoring data is one of a still image, moving image, or panorama image, or the like. In a location of the main body 10 shown in a map of FIG. 18(a), monitoring data in a shooting direction being displayed may be displayed on the display screen of the mobile terminal 300.

The mobile terminal 300 may be configured to selectively output the map of FIG. 18(a) and the monitoring data of FIG. 18(b), and in some cases, divide the display area of the screen, and then output the map and monitoring data on the divided display areas at the same time.

The moving robot 1 may be configured to analyze the monitoring data, determine the kind of an obstacle, and detect whether intrusion is occurred by detecting the movement of the obstacle.

Although intrusion is not detected by the moving robot 1, in a case where a key input or a touch input is input in response to a monitoring data being displayed, the mobile terminal 300 may be configured to determine that an intrusion detection by a user has been occurred, and then transmit to a message with respect to the intrusion detection to a stored or indicated security agency. In addition, the mobile terminal 300 may be configured to transmit an alert signal or message for warning of intrusion to the moving robot 1, and cause the moving robot to output a predetermined alert sound.

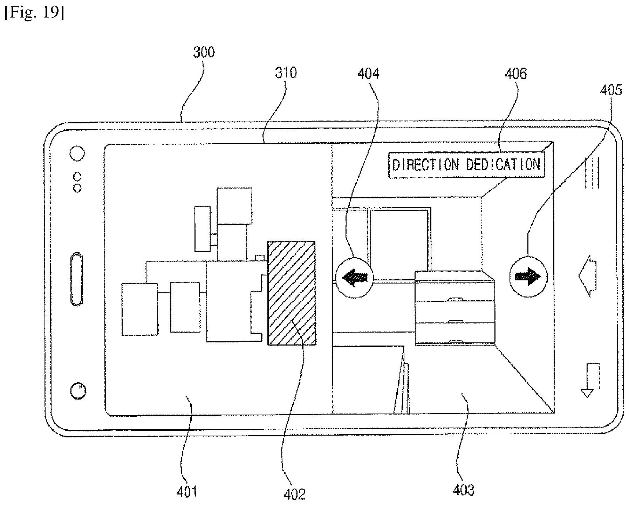

FIG. 19 is an example view illustrating a method of setting monitoring directions of the moving robot according to an embodiment.

As shown in FIG. 19, the mobile terminal 300 may be configured to set a monitoring direction while displaying an image of an area on the screen 310.

When the mobile terminal 300 sets monitoring mode, it may be configured to select any one area 402 on a map 401 of a cleaning area, and set a monitoring direction for the selected area.

In this case, the moving robot 1 may be configured to move the selected area 402 according to a control command of the mobile terminal 300, and transmit images of the area to the mobile terminal 300.

If the moving robot moves to the selected area and transmit images, the mobile terminal 300 may be configured to display the received images 403 on an area or a portion of an area of the screen. In a state where at least one image 403 is displayed, if any key from a left arrow 404 and a right arrow 405 is selected, the mobile terminal 300 may be configured to change the monitoring direction. If the monitoring direction is changed, the mobile terminal 300 may be configured to transmit data in connection with the change of the monitoring direction to the moving robot 1, and then the moving robot 1 may be configured to cause the main body 10 to rotate and adjust a shooting angle of the image acquisition unit 140, in response to the received data.

For example, if the left arrow 404 is selected in the mobile terminal 300, the moving robot 1 may be configured to cause the main body 10 to rotate at a predetermined angle in place, and change the monitoring direction. The moving robot 1 may be configured to transmit monitoring data of the changed direction to the mobile terminal 300.

The mobile terminal 300 may be configured to receive images being taken in the changed direction, and display them on the screen. Thus, a user may set the monitoring direction while checking the actual image being taken, through the mobile terminal 300.

If a monitoring direction is selected by a key input or a touch input, and a direction dedication key 406 is input, the mobile terminal 300 may be configured to set the current selected direction as the monitoring direction, and transmit the relevant data or signals to the moving robot 1. The moving robot 1 may be configured to store the monitoring direction for the selected area 402 in response to the received data.

The mobile terminal 300 may be configured to set monitoring directions at respective monitoring locations, or set a plurality of the monitoring locations in one monitoring direction.

If the moving robot 1 travels in a monitoring mode, it may be configured to take images of a selected area at a dedicated monitoring direction, and transmit the relevant monitoring data to the mobile terminal 300.

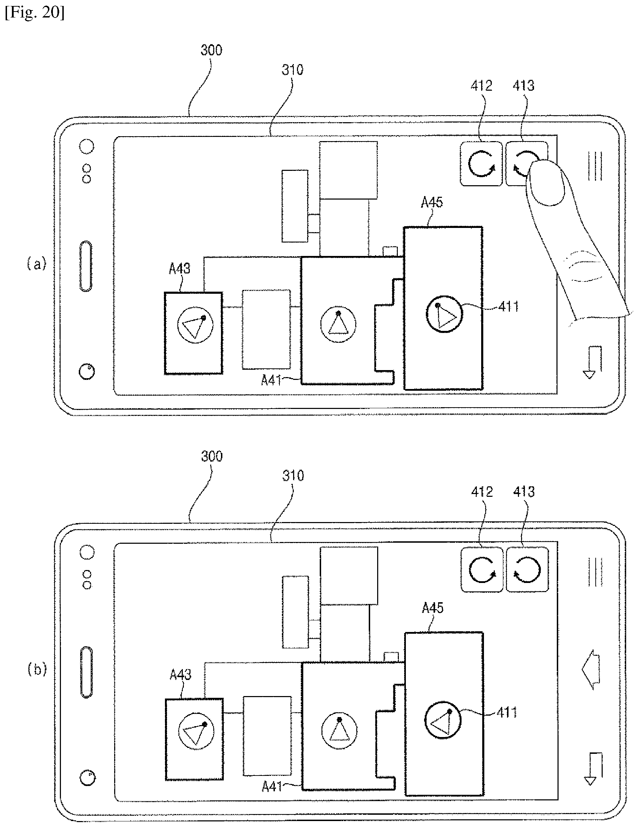

FIG. 20 is example views illustrating setting of monitoring locations of the moving robot according to another embodiment.

As shown in FIG, 20, the mobile terminal 300 may be configured to select a monitoring area in a screen 310 in which the map of a cleaning area is displayed, and set a monitoring mode on the moving robot 1. The mobile terminal 300 may be configured to display the selected area differently from the non-selected area.

As shown in FGI, 20(a), the mobile terminal 300 may be configured to set at least one area as a monitoring area in a screen 310 in which at least one map is displayed, and then set monitoring directions per area through a direction key 412, 413 displayed or placed on an area of the screen or a portion of the main body.

The mobile terminal 300 may be configured to display the monitoring directions per area as monitoring direction icons 411. The mobile terminal 300 may not display a monitoring direction icon in an area which is not selected as a monitoring area. The monitoring direction icon 411 may be displayed at a monitoring location. In a case where a plurality of monitoring locations is set in one area, the monitoring direction icons may be displayed per monitoring location.

In a state were a plurality of areas are set as monitoring areas, if monitoring direction icons 411 displayed in each area is selected, the mobile terminal 300 may be configured to display the selected monitoring direction icon 411 differently from other monitoring direction icons. For example, the monitoring direction icon may be displayed as a specific color or as a bold outline.

After the monitoring direction icon 411 is selected, if a direction key 412, 413 is input, the monitoring direction icon 411 may be changed in response to the direction key.

For example, In a state where the monitoring direction icon 411 of the forty fifth area A45 is selected, if a right-rotation key 413 from a left-rotation key 412 and the right-rotation key 413 is selected, the mobile terminal 300 may be configured to change a right-downward monitoring direction relative to the screen to a left-downward monitoring direction, as shown in FIG. 20(b), and then display the changed monitoring direction. The mobile terminal 300 may be configured to change the monitoring direction for the forty fifth area 45 from southeast to southwest, assuming that the bottom of the map is south.

After the monitoring direction has been changed, if another area is changed or another monitoring direction icon is selected, the mobile terminal 300 may be configured to determine that a monitoring direction for such area is set.

If monitoring directions are set for all monitoring areas, the mobile terminal 300 may be configured to transmit data of the monitoring areas and the monitoring directions to the moving robot 1 in which a monitoring mode is set.

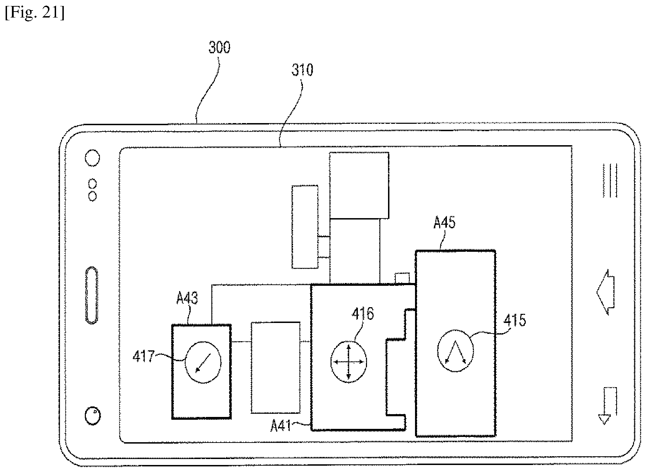

FIG. 21 is an example view illustrating a control screen of a mobile terminal in accordance with setting of a monitoring mode of the moving robot according to an embodiment.

As shown in FIG. 21, a plurality of monitoring locations may be set at one monitoring location.

The mobile terminal 300 may be configured to display monitoring direction icons 415 to 417 configured by arrows corresponding to a plurality of monitoring directions.

If a monitoring direction of a second direction at the monitoring location of the forty fifth area A45 is set, the mobile terminal 300 may be configured to display the first monitoring direction icon 415 including a right-downward arrow and a left-downward arrow.

In addition, if a monitoring direction of a forth direction in the forty first area A41 is set, the mobile terminal 300 may be configured to display the second monitoring direction icon 416 including arrows of up, down, left, and right at 90 degrees, in response to each monitoring direction, and display the third monitoring direction icon 417 including a left-downward arrow in the forty third area A43.

If a monitoring location or a monitoring direction is set from the mobile terminal, the moving robot 1 may be configured to set a monitoring path connecting monitoring locations to one another. If an obstacle is present in the monitoring path based on an obstacle information included in a map, the moving robot 1 may be configured to modify the monitoring path to bypass the obstacle. In addition, if it is determined that it is not possible to take images in the monitoring direction based on an obstacle information included in a map, the moving robot 1 may be configured to add a monitoring location, and cause to take images in added monitoring direction. In a case where a monitoring direction or a monitoring location is added, the moving robot 1 may be configured to transmit a relevant notification message to the mobile terminal in which a message or a signal for notifying is displayed or output on the display screen or the main body.

For example, as shown in FIG. 12, if a monitoring direction at the first point is set toward the eleventh obstacle O11, the twelfth point P12 is added as an additional monitoring location, and taking of images is performed in the dedicated direction.

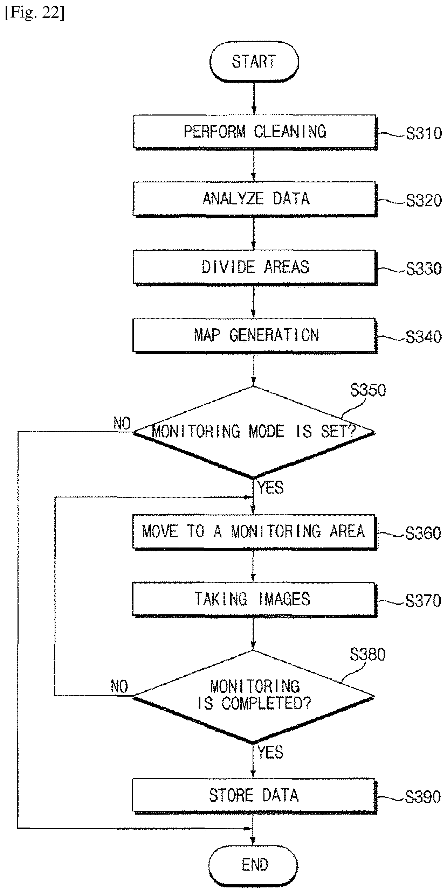

FIG. 22 is a flow chart illustrating monitoring methods of the moving robot for a cleaning area according to an embodiment.

As shown in FIG.22, the moving robot 1 may be configured to travel in a cleaning area, and perform cleaning by sucking foreign substances through the leaning unit 260 S310. The moving robot 1 may be configured to detect the cleaning area while performing cleaning, analyze data, such as obstacle information and/or location information detected or input while traveling S320, divide the cleaning area into a plurality of areas, and generate a map which has the divided areas S340. The obstacle recognition unit 210 may be configured to determine a detected obstacle, and the map generation unit 220 may determine the shape of the area in response to the obstacle information, and generate a map including the location of the obstacle. The map generation unit 220 may be configured to divide the cleaning area into a plurality of areas in response to the size, shape of the area, the number of contacts between areas, and then generate the map.

Meanwhile, if a map is stored or available, the moving robot 1 may be configured to perform cleaning operations while traveling a dedicated area or all areas of a cleaning area based on the map. The moving robot 1 may be configured to update the map based on information on obstacles detected while performing cleaning based on the map.

The moving robot 1 may transmit the generated map to the mobile terminal 300. The mobile terminal 300 may be configured to display the received map on the display screen, input a cleaning command or a monitoring command into the moving robot 1 through the map.

If a monitoring mode is set by the operation unit 160 or the mobile terminal 300, the moving robot 1 may be configured to move to at least one monitoring area of a cleaning area including a plurality of areas, take images, and generate monitoring data from the taken images S370.

In a case where a monitoring mode is set without setting of a separate area, the moving robot 1 may be configured to monitor all the areas of a cleaning area. The moving robot 1 may be configured to set monitoring locations per area, and perform monitoring while traveling along a monitoring path connecting monitoring locations to one another. The monitoring path may be set by connecting the monitoring locations at the shortest distance, and if an obstacle is positioned in the monitoring path, change the monitoring path so that the moving robot 1 can travel by bypassing the obstacle.

Meanwhile, in a case where at least one area of a plurality of areas through the mobile terminal 300 is set as a monitoring area, the moving robot 1 may be configured to monitor the dedicated monitoring area.

In a case where a monitoring location and a monitoring direction per monitoring area are separately set through the mobile terminal 300, the moving robot 1 may be configured to set a monitoring path which connects the set monitoring locations or one another, and when reaching each monitoring location, take images in the dedicated monitoring direction, and generate monitoring data. In a case where a monitoring direction is not separately set, the moving robot 1 may be configured to take images while repeatedly rotating on a per-predetermined-rotation-angle basis and stopping or continuously rotating, at the monitoring location, and generate monitoring data. In this case, the moving robot 1 may be configured to generate monitoring data in an image form from images being taken while stopping, and generate monitoring data in a moving image or a panorama image form from images being taken while rotating. In addition, in a case where it is not possible to monitor in a dedicated direction due to an obstacle positioned in an area, at a monitoring location, the moving robot may be configured to add a monitoring location, take images in a dedicated direction, and generate monitoring data.

The moving robot 1 may be configured to transmit the generated monitoring data from images to the mobile terminal 300, and then the mobile terminal 300 may display the monitoring data on the display screen.

If the monitoring of any one area is completed, the moving robot 1 may be configured to move another monitoring area, take images, and generate monitoring data S370.

If the monitoring of all areas is completed S380, the moving robot 1 may be configured to return to a dedicated location, such as a charging stand, and store data of an obstacle or the movement of the obstacle being detected in a monitoring mode S390. The moving robot 1 may be configured to store monitoring data being generated while traveling in a monitoring mode and monitoring data being generated at a monitoring location. In addition, the moving robot 1 may be configured to transmit the monitoring data to an external server so that it is accumulatively stored

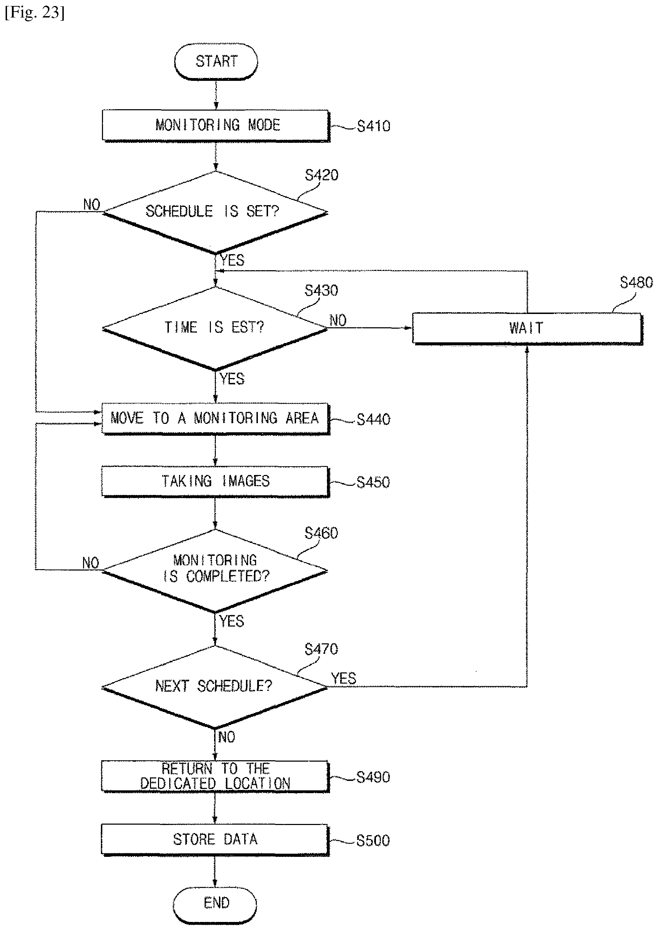

FIG. 23 is a flow chart illustrating control methods in accordance with monitoring schedules of the moving robot according to another embodiment.

As shown in FIG. 23, the monitoring mode of the moving robot 1 may be set be the operation unit 160 or the mobile terminal 300 S410.

The controller 200 of the moving robot 1 may be configured to determine whether a schedule according to a monitoring mode is set S420. If the schedule is set, the controller 200 may be configured to wait until the set time is reached. If a cleaning command is input before the set time is reached the controller 200, the controller 200 may be configured to cause the travel driving unit 250 and the cleaning unit 260 to perform the designated cleaning.

Upon reaching the set time S430, the controller 200 may be configured to cause the travel driving unit 250 to allow the moving robot to move a dedicated monitoring area S440, cause the image acquisition unit 140 to take images of a monitoring area at a monitoring location, and generate monitoring data S450.

Meanwhile, in a case where a schedule is not set, if a monitoring mode is set, the controller 200 may be configured to directly move a monitoring area, take images, generate monitoring data, and then move to another monitoring area and perform monitoring S440, S450. The controller may be configured to transmit the generated monitoring data along with the location information of the main body to the mobile terminal.

In a case where a separate monitoring area is not set, the controller 200 may be configured to set all areas of a cleaning area as monitoring areas, and cause monitoring operations to be performed, and also set center points of the monitoring areas as monitoring locations, and set a monitoring path connecting monitoring locations to one another.

In addition, in a case where a separate area is set as a monitoring area, the controller 200 may be configured to set a monitoring path for a dedicated monitoring area. In a case where a monitoring location is dedicated, the controller 200 may be configured to set monitoring paths to connect the dedicated monitoring locations to one another. In addition, in a case where a monitoring direction is set per monitoring location, upon reaching the monitoring location, the controller 200 may be configured to adjust the direction of the main body, cause it to take images in a dedicated monitoring direction, and them generate monitoring data in the monitoring direction.

The controller 200 may be configured to generate monitoring data from images being taken, and transmit it the mobile terminal 300 through the communication unit 270. Thus, the mobile terminal 300 may be configured to output monitoring data on the display screen.

The controller 200 may be configured to analyze the images image being taken by the acquisition unit 140, and determine whether intrusion is occurred by detecting an obstacle and determining the movement of the obstacle.

If intrusion is detected, the controller 200 may be configured to generate a warning message and transmit it to the mobile terminal 300. In addition, the controller 200 may be configured to output a predetermined alert sound.

If the monitoring of an area is completed, the moving robot moves to the next monitoring area S440, and then take images a monitoring location in the next monitoring area and generate monitoring data S450. The generated monitoring data may be transmitted to the mobile terminal.

If the monitoring of all areas is completed S460, it is determined whether a following schedule is set S470, and if a following schedule is set, the moving robot waits until the following schedule is reached. The controller 200 may cause the moving robot to wail at a dedicated location, or return to a charging stand to wait.

In a case where a dedicated schedule is not present, the controller 200 may be configured to cause the main body 10 to move to a dedicated location, such as the charging stand S490. The controller 200 may be configured to store information of an obstacle being detected during performing of a monitoring mode and monitoring data S500.

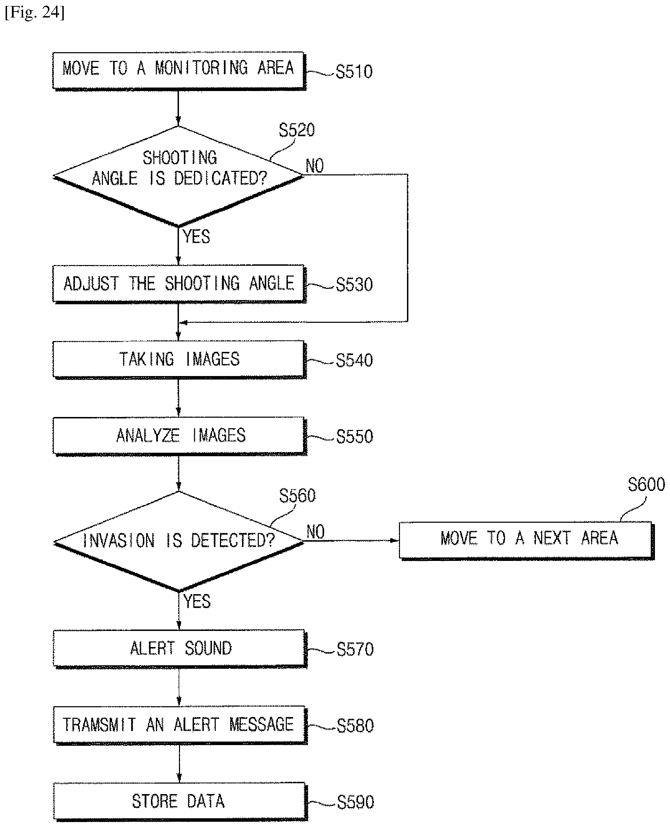

FIG. 24 is a flow chart illustrating control methods in accordance with setting of monitoring modes of the moving robot according to an embodiment.

As shown in FIG. 24, as a monitoring mode is set, the moving robot 1 may be configured to move to a dedicated monitoring area.

The controller 200 may be configured to control the travel driving unit 250 by which the controller moves a monitoring area and move a monitoring location dedicated in the monitoring area. In a case where a separate monitoring area is not set, the controller 200 may be configured to set a plurality of areas in a cleaning area as monitoring areas, and in a case where a monitoring area is set, set a selected area as a monitoring area.

While traveling along a monitoring path, the controller 200 may be configured to cause the image acquisition unit 140 to take images during traveling and generate monitoring data. Whether taking of images during traveling is performed may be changed according to a setting. In addition, the controller 200 may be configured to transmit the location of the main body 10 being determined through the location recognition unit 240 and monitoring data generated a predetermined time interval to the mobile terminal 300. The mobile terminal 300 may be configured to display the location of the moving robot 1 based on the received data on a map, and display the received monitoring data on the display screen.

In addition, although monitoring locations are the center points of areas, if a specific location is dedicated, the controller 200 may be configured to set the dedicated location as a monitoring location. In some cases, the controller 200 may be configured to change the monitoring location or set an additional monitoring location depending on whether an obstacle is present in an area.

In a case where the main body 10 reached a monitoring location, the controller 200 may be configured to determine whether a shooting angle for a monitoring direction is dedicated S520. The travel controller 230 may be configured to control the travel driving unit 250 so that the image acquisition unit 140 faces a dedicated monitoring direction, and cause main body 10 to rotate in place, and thus the shooting angle of the image acquisition unit 140 may be adjusted S530.

The controller 200 may be configured to cause the image acquisition unit 140 to take images in a monitoring direction S540. In a case where a plurality of monitoring directions in any one monitoring location is set, the travel controller 230 may be configured to cause the travel driving unit 250 to allow the main body 10 to rotate a predetermined angle so that images can be taken in all dedicated monitoring directions.

In a case where a separate monitoring direction is not set, the controller 200 may be configured to take images at a plurality of directions by rotating the main body 10 at a predetermined angle, corresponding to the angle of view of the mage acquisition unit 140. In addition, the controller 200 may be configured to take moving images or panorama images while rotating 360 degrees at low speed at a monitoring location. In addition, in a case where the monitoring data is set to be generated in either one of images, moving images or panorama images by the operation unit or the mobile terminal, the controller 200 may be configured to control an operation in a monitoring location according to the type of the monitoring data.

The controller 200 may be configured to analyze an acquisition image being taken by the image acquisition unit 140 S550, detect an obstacle, and determine whether intrusion is occurred by determining the movement of the obstacle. The obstacle recognition unit 210 may be configured to analyze the taken images, detect an obstacle, and determine the type, size, and location of the obstacle, and determine whether it is a new obstacle by comparing it with the previously stored obstacle information.

In addition, the obstacle recognition unit 210 may be configured to determine whether it is a new obstacle by comparing with the previously stored obstacle information, and determine whether intrusion is occurred by detecting the movement of the obstacle S560.

The controller 200 may be configured to output a predetermined alert sound if intrusion is detected 570. If intrusion is detected, the controller 200 may be configured to generate a warning message and transmit it to the mobile terminal 300 or a stored or dedicated security agency S580.

Meanwhile, although intrusion is not detected by the moving robot 1, in a case where a key input or a touch input is input in response to a monitoring data being displayed, the mobile terminal 300 may be configured to determine that intrusion detection by a user has been occurred, and then transmit to a message with respect to the intrusion detection to a stored or indicated security agency. In addition, the mobile terminal 300 may be configured to transmit an alert signal or message for warning of intrusion to the moving robot 1, and cause the moving robot to output a predetermined alert sound.

The controller 200 may be configured to store data of the intrusion detection, and store information on an obstacle and the monitoring data S590. The stored monitoring data may be selectively replayed.

In a case where intrusion is not detected, the controller 200 may be configured to move to the next area according to a dedicated monitoring path S600, take images at a monitoring location, and generate monitoring data, and this procedure may be repeatedly performed.

Accordingly, the moving robot 1 according to the present disclosure may be configured to monitor a cleaning area by taking images while moving to the cleaning area composed of a plurality of areas. Since monitoring data generated from images being taken while moving to a plurality of areas in order may be transmitted to a user, the user may check the situation of each area in real time, and also the monitoring data may be stored and thus be selectively replayed if necessary. In addition, according to the present disclosure, the monitoring areas, monitoring location and/or monitoring direction may be dedicated, and also monitoring at a specific location may be set.

## Claims

1. A moving robot comprising:
a main body (10) configured to travel a cleaning area and suck foreign substances;
a data unit (280) configured to store a map of the cleaning area;
an image acquisition unit (140) configured to take images in front of the main body (10);
a controller (230), if a monitoring mode is set, configured to set at least one area of a plurality of areas composing the cleaning area based on the map as a monitoring area, set at least one monitoring location for the monitoring area, generate monitoring data based on images being taken by the image acquisition unit (140) while moving in the monitoring area, analyze the monitoring data, monitor the cleaning area and detect intrusion,
wherein the controller (230) is configured to analyze the monitoring data, determine a kind of a detected obstacle, detect the movement of the obstacle, and determine whether the intrusion is occurred in cleaning area,
wherein, if the intrusion is detected, the controller (230) is configured to cause an alert sound to be output, generate a message concerning the intrusion detection, and transmit it to a mobile terminal (300) or an external security agency.

2. The moving robot according to claim 1, wherein the monitoring location is at least one of locations dedicated by a mobile terminal (300) based on the map, or the center point of the monitoring area.
wherein the controller (230) is further configured to change the at least one monitoring location or add a monitoring location based on information on an obstacle included in the map.

3. The moving robot according to claim 1, wherein the controller (230) is further configured to cause the main body (10) to repeatedly rotate at a predetermined rotation angle and stop for a predetermined time in the at least one monitoring location, and generate the monitoring data from images being taken by the image acquisition unit (140) while the main body (10) is stopping.

4. The moving robot according to claim 1, wherein the controller (230) is further configured to cause the main body (10) to rotate at a low speed lower than or equal to a predetermined speed in the at least one monitoring location, and generate the monitoring data from images being taken by the image acquisition unit (140) while the main body (10) is rotating.

5. The moving robot according to claim 1, wherein the controller (230) is further configured to generate the monitoring data in the form of at least one of a still image, a moving image and a panorama image,
wherein the controller (230) is further configured to control a rotation operation of the main body (10) at a monitoring location set among the monitoring areas according to the form of the monitoring data.

6. The moving robot according to claim 1, wherein, the controller (230) is further configured to set at least one monitoring direction for the monitoring area, adjust a shooting angle of the image acquisition unit (140) by controlling the main body (10) at the at least one monitoring location, and generate the monitoring data in the at least one monitoring direction.

7. The moving robot according to claim 1, wherein the controller (230) is configured to set a monitoring path connecting the monitoring locations to one another, and cause the main body (10) to move according to the monitoring path and to monitor the cleaning area.

8. The moving robot according to claim 1, wherein, the controller (230) is further configured to set a priority for the monitoring areas, set a monitoring path sequentially connecting the monitoring locations to one another according to the priority.

9. The moving robot according to claim 1, further comprising a mobile terminal (300) for inputting a cleaning command or a monitoring command into the main body (10),
wherein the controller (230) is configured to set a monitoring mode in response to the monitoring command, and transmit the monitoring data generated in the monitoring mode and a location information of the main body (10) to the mobile terminal (300),
wherein the mobile terminal (300) is configured to output the monitoring data on a display screen (310), and display the location of the main body (10) on the map of the cleaning area in response to the location information.

10. A method of controlling a moving robot, the method comprising:
setting a monitoring mode for a cleaning area in response to data being input from an operation unit (160) or a mobile terminal (300);
setting at least one area of a plurality of areas composing the cleaning area as a monitoring area;
setting at least one monitoring location for the monitoring area;
causing a main body (10) to move to the monitoring area;
generating monitoring data by taking images of the monitoring area;
monitoring the cleaning area by analyzing the monitoring data and detecting whether intrusion is occurred; and
outputting an alert sound if the intrusion is detected,
by means of a controller (230) of the moving robot performing the steps of:
analyzing the monitoring data,
determining a kind of a detected obstacle,
detecting the movement of the obstacle, and
determining whether the intrusion is occurred in the cleaning area,
wherein, if the intrusion is detected:
causing an alert sound to be output,
generating a message concerning the intrusion detection, and
transmitting it to a mobile terminal (300) or an external security agency.

11. The method of claim 10, further comprising: changing the at least one monitoring location or add a monitoring location in response to information on an obstacle included in a map of the cleaning area.

12. The method of claim 10, further comprising: setting a monitoring path for the monitoring area by connecting the monitoring locations to one another.

13. The method of claim 10, further comprising:
moving to the at least one monitoring location if reaches the monitoring area;
rotating the main body (10) at a predetermined angle so that a shooting angle of an image acquisition unit (140) faces to a dedicated monitoring direction in the at least one monitoring location;
taking images of the dedicated monitoring direction; and
generating the monitoring data in the form of an image from the taken images.

14. The method of claim 10, further comprising:
transmitting a location of the main body (10) to the mobile terminal (300) while moving to the monitoring area;
displaying a map of the cleaning area and the location of the main body (10) on a display screen (310) of the mobile terminal (300);
transmitting the monitoring data to the mobile terminal (300); and
displaying the monitoring data on the display screen (310) of the mobile terminal (300).

## Patentansprüche

1. Beweglicher Roboter, der Folgendes umfasst:
einen Hauptkörper (10), der konfiguriert ist, einen Reinigungsbereich abzufahren und Fremdsubstanzen aufzusaugen;
eine Dateneinheit (280), die konfiguriert ist, eine Karte des Reinigungsbereichs zu speichern;
eine Bilderfassungseinheit (140), die konfiguriert ist, Bilder vor dem Hauptkörper (10) aufzunehmen;
eine Steuerung (230), die, falls eine Überwachungsbetriebsart eingestellt ist, konfiguriert ist, wenigstens einen von mehreren Bereichen, die den Reinigungsbereich bilden, auf der Basis der Karte als einen Überwachungsbereich festzulegen, wenigstens eine Überwachungsposition für den Überwachungsbereich festzulegen, Überwachungsdaten auf der Basis von Bildern, die durch die Bilderfassungseinheit (140) während einer Bewegung im Überwachungsbereich aufgenommen wurden, zu erzeugen, die Überwachungsdaten zu analysieren, den Reinigungsbereich zu überwachen und einen Einbruch zu detektieren,
wobei die Steuerung (230) konfiguriert ist, die Überwachungsdaten zu analysieren, die Art eines detektierten Hindernisses festzustellen, die Bewegung des Hindernisses zu detektieren und festzustellen, ob ein Einbruch im Reinigungsbereich erfolgt ist,
wobei dann, falls der Einbruch detektiert wird, die Steuerung (230) konfiguriert ist, zu veranlassen, dass ein Warnton ausgegeben wird, eine Nachricht bezüglich der Detektion des Einbruchs zu erzeugen und diese an ein mobiles Endgerät (300) oder an einen externen Sicherheitsdienst zu senden.

2. Beweglicher Roboter nach Anspruch 1, wobei die Überwachungsposition wenigstens eine der Positionen, die durch ein mobiles Endgerät (300) auf der Basis der Karte zugewiesen werden, oder der Mittelpunkt des Überwachungsbereichs ist,
wobei die Steuerung (230) ferner konfiguriert ist, die wenigstens eine Überwachungsposition zu ändern oder eine Überwachungsposition auf der Basis von Informationen bezüglich eines Hindernisses, das in der Karte enthalten ist, hinzuzufügen.

3. Beweglicher Roboter nach Anspruch 1, wobei die Steuerung (230) ferner konfiguriert ist, zu veranlassen, dass sich der Hauptkörper (10) bei der wenigstens einen Überwachungsposition wiederholt um einen festgelegten Drehwinkel dreht und für eine festgelegte Zeitspanne stoppt, und die Überwachungsdaten aus Bildern, die durch die Bilderfassungseinheit (140) aufgenommen wurden, während der Hauptkörper (10) stoppt, zu erzeugen.

4. Beweglicher Roboter nach Anspruch 1, wobei die Steuerung (230) ferner konfiguriert ist, zu veranlassen, dass sich der Hauptkörper (10) bei der wenigstens einen Überwachungsposition mit einer niedrigen Drehzahl dreht, die kleiner oder gleich einer festgelegten Drehzahl ist, und die Überwachungsdaten aus Bildern, die durch die Bilderfassungseinheit (140) aufgenommen wurden, während sich der Hauptkörper (10) dreht, zu erzeugen.

5. Beweglicher Roboter nach Anspruch 1, wobei die Steuerung (230) ferner konfiguriert ist, die Überwachungsdaten in der Form eines Standbilds, eines Bewegtbilds und/oder eines Panoramabilds zu erzeugen,
wobei die Steuerung (230) ferner konfiguriert ist, einen Drehvorgang des Hauptkörpers (10) bei einer Überwachungsposition, die aus den Überwachungsbereichen festgelegt wurde, in Übereinstimmung mit der Form der Überwachungsdaten zu steuern.

6. Beweglicher Roboter nach Anspruch 1, wobei die Steuerung (230) ferner konfiguriert ist, wenigstens eine Überwachungsrichtung für den Überwachungsbereich festzulegen, einen Aufnahmewinkel der Bilderfassungseinheit (140) durch Steuern des Hauptkörpers (10) bei der wenigstens einen Überwachungsposition anzupassen und die Überwachungsdaten in der wenigstens einen Überwachungsrichtung zu erzeugen.

7. Beweglicher Roboter nach Anspruch 1, wobei die Steuerung (230) konfiguriert ist, einen Überwachungspfad festzulegen, der die Überwachungspositionen miteinander verbindet, und zu veranlassen, dass sich der Hauptkörper (10) in Übereinstimmung mit dem Überwachungspfad bewegt und den Reinigungsbereich überwacht.

8. Beweglicher Roboter nach Anspruch 1, wobei die Steuerung (230) ferner konfiguriert ist, eine Priorität für die Überwachungsbereiche festzulegen und einen Überwachungspfad festzulegen, der die Überwachungspositionen in Übereinstimmung mit der Priorität der Reihe nach miteinander verbindet.

9. Beweglicher Roboter nach Anspruch 1, der ferner ein mobiles Endgerät (300) zum Eingeben eines Reinigungsbefehls oder eines Überwachungsbefehls bei dem Hauptkörper (10) umfasst,
wobei die Steuerung (230) konfiguriert ist, eine Überwachungsbetriebsart in Reaktion auf den Überwachungsbefehl festzulegen, und die Überwachungsdaten, die in der Überwachungsbetriebsart erzeugt werden, und Positionsinformationen des Hauptkörpers (10) an das mobile Endgerät (300) zu senden,
wobei das mobile Endgerät (300) konfiguriert ist, die Überwachungsdaten auf einem Anzeigebildschirm (310) auszugeben und die Position des Hauptkörpers (10) auf der Karte des Reinigungsbereichs in Reaktion auf die Positionsinformationen anzuzeigen.

10. Verfahren zum Steuern eines beweglichen Roboters, wobei das Verfahren die folgenden Schritte umfasst:
Festlegen einer Überwachungsbetriebsart für einen Reinigungsbereich in Reaktion auf Daten, die von einer Bedienungseinheit (160) oder einem mobilen Endgerät (300) eingegeben werden;
Festlegen wenigstens eines von mehreren Bereichen, die den Reinigungsbereich bilden, als einen Überwachungsbereich;
Festlegen wenigstens einer Überwachungsposition für den Überwachungsbereich;
Veranlassen, dass sich der Hauptkörper (10) zum Überwachungsbereich bewegt;
Erzeugen von Überwachungsdaten durch Aufnehmen von Bildern vom Überwachungsbereich;
Überwachen des Reinigungsbereichs durch Analysieren der Überwachungsdaten und Detektieren, ob ein Einbruch erfolgt ist; und
Ausgeben eines Warntons, falls ein Einbruch detektiert wird,
Durchführen der folgenden Schritte mittels einer Steuerung (230) des beweglichen Roboters:
Analysieren der Überwachungsdaten,
Feststellen der Art eines detektierten Hindernisses,
Detektieren der Bewegung des Hindernisses, und
Feststellen, ob ein Einbruch im Reinigungsbereich erfolgt ist,
wobei dann, wenn ein Einbruch detektiert wird, die folgenden Schritte ausgeführt werden:
Veranlassen, dass ein Warnton ausgegeben wird,
Erzeugen einer Nachricht, die die Detektion des Einbruchs betrifft, und
Senden der Nachricht an ein mobiles Endgerät (300) oder an einen externen Sicherheitsdienst.

11. Verfahren nach Anspruch 10, das ferner den folgenden Schritt umfasst: Ändern der wenigstens einen Überwachungsposition oder Hinzufügen einer Überwachungsposition in Reaktion auf Informationen bezüglich eines Hindernisses, das in einer Karte des Reinigungsbereichs enthalten ist.

12. Verfahren nach Anspruch 10, das ferner den folgenden Schritt umfasst: Festlegen eines Überwachungspfads für den Überwachungsbereich durch Verbinden der Überwachungspositionen miteinander.

13. Verfahren nach Anspruch 10, das ferner die folgenden Schritte umfasst:
Bewegen zu der wenigstens einen Überwachungsposition beim Erreichen des Überwachungsbereichs;
Drehen des Hauptkörpers (10) um einen festgelegten Winkel, so dass ein Aufnahmewinkel einer Bilderfassungseinheit (140) bei der wenigstens einen Überwachungsposition in eine zugewiesene Überwachungsrichtung zeigt;
Aufnehmen von Bildern der zugewiesenen Überwachungsrichtung; und
Erzeugen der Überwachungsdaten in der Form eines Bilds aus den aufgenommenen Bildern.

14. Verfahren nach Anspruch 10, das ferner die folgenden Schritte umfasst:
Senden einer Position des Hauptkörpers (10) an das mobile Endgerät (300) während einer Bewegung zum Überwachungsbereich;
Anzeigen einer Karte des Reinigungsbereichs und der Position des Hauptkörpers (10) auf einem Anzeigebildschirm (310) des mobilen Endgeräts (300);
Senden der Überwachungsdaten an das mobile Endgerät (300); und
Anzeigen der Überwachungsdaten auf dem Anzeigebildschirm (310) des mobilen Endgeräts (300).

## Revendications

1. Robot mobile comportant :
un corps principal (10) configuré pour parcourir une zone de nettoyage et aspirer des substances étrangères ;
une unité de données (280) configurée pour stocker une carte de la zone de nettoyage ;
une unité d'acquisition d'images (140) configurée pour prendre des images à l'avant du corps principal (10) ;
une commande (230), si un mode de surveillance est activé, configurée pour définir au moins une zone parmi une pluralité de zones composant la zone de nettoyage sur la base de la carte comme étant une zone de surveillance, définir au moins un emplacement de surveillance pour la zone de surveillance, générer des données de surveillance basées sur des images étant prises par l'unité d'acquisition d'images (140) tout en se déplaçant dans la zone de surveillance, analyser les données de surveillance, surveiller la zone de nettoyage et détecter une intrusion,
dans lequel la commande (230) est configurée pour analyser les données de surveillance, déterminer un type d'un obstacle détecté, détecter le mouvement de l'obstacle, et déterminer si l'intrusion a eu lieu dans la zone de nettoyage,
dans lequel, si l'intrusion est détectée, la commande (230) est configurée pour entraîner l'émission d'un son d'alerte, générer un message concernant la détection d'intrusion et le transmettre à un terminal mobile (300) ou à une agence de sécurité externe.

2. Robot mobile selon la revendication 1, dans lequel l'emplacement de surveillance est au moins un emplacement parmi des emplacements dédiés par un terminal mobile (300) sur la base de la carte, ou le point central de la zone de surveillance,
dans lequel la commande (230) est en outre configurée pour changer le au moins un emplacement de surveillance ou ajouter un emplacement de surveillance basé sur des informations concernant un obstacle inclus dans la carte.

3. Robot mobile selon la revendication 1, dans lequel la commande (230) est en outre configurée pour amener le corps principal (10) à tourner de manière répétée à un angle de rotation prédéterminé et s'arrêter pendant un temps prédéterminé au au moins un emplacement de surveillance, et générer les données de surveillance à partir d'images prises par l'unité d'acquisition d'images (140) lorsque le corps principal (10) est à l'arrêt.

4. Robot mobile selon la revendication 1, dans lequel la commande (230) est en outre configurée pour amener le corps principal (10) à tourner de manière répétée à une petite vitesse inférieure ou égale à une vitesse prédéterminée au au moins un emplacement de surveillance, et générer les données de surveillance à partir d'images prises par l'unité d'acquisition d'images (140) lorsque le corps principal (10) est en rotation.

5. Robot mobile selon la revendication 1, dans lequel la commande (230) est en outre configurée pour générer les données de surveillance sous la forme d'au moins une image parmi une image fixe, une image mobile et une image panoramique,
dans lequel la commande (230) est en outre configurée pour commander une opération de rotation du corps principal (10) à un emplacement de surveillance défini parmi les zones de surveillance en fonction de la forme des données de surveillance.

6. Robot mobile selon la revendication 1, dans lequel la commande (230) est en outre configurée pour définir au moins une direction de surveillance pour la zone de surveillance, régler un angle de prise de vue de l'unité d'acquisition d'images (140) en commandant le corps principal (10) au niveau du au moins un emplacement de surveillance, et générer les données de surveillance dans la au moins une direction de surveillance.

7. Robot mobile selon la revendication 1, dans lequel la commande (230) est configurée pour définir un trajet de surveillance reliant les emplacements de surveillance les uns aux autres, et amener le corps principal (10) à se déplacer en fonction du trajet de surveillance et à surveiller la zone de nettoyage.

8. Robot mobile selon la revendication 1, dans lequel la commande (230) est en outre configurée pour définir une priorité pour les zones de surveillance et définir un trajet de surveillance reliant séquentiellement les emplacements de surveillance les uns aux autres en fonction de la priorité.

9. Robot mobile selon la revendication 1, comportant en outre un terminal mobile (300) pour entrer une instruction de nettoyage ou une instruction de surveillance dans le corps principal (10),
dans lequel la commande (230) est configurée pour activer un mode de surveillance en réponse à l'instruction de surveillance, et transmettre les données de surveillance générées dans le mode de surveillance et une information d'emplacement du corps principal (10) au terminal mobile (300),
dans lequel le terminal mobile (300) est configuré pour générer les données de surveillance sur un écran d'affichage (310), et afficher l'emplacement du corps principal (10) sur la carte de la zone de nettoyage en réponse à l'information d'emplacement.

10. Procédé de commande d'un robot mobile, le procédé comportant les étapes consistant à :
activer un mode de surveillance pour une zone de nettoyage en réponse à des données étant entrées à partir d'une unité de manœuvre (160) ou d'un terminal mobile (300) ;
définir au moins une zone parmi une pluralité de zones composant la zone de nettoyage comme étant une zone de surveillance ;
définir au moins un emplacement de surveillance pour la zone de surveillance ;
amener un corps principal (10) à se déplacer jusqu'à la zone de surveillance ;
générer des données de surveillance en prenant des images de la zone de surveillance ;
surveiller la zone de nettoyage en analysant les données de surveillance et détecter si une intrusion a eu lieu ; et
émettre un son d'alerte si l'intrusion est détectée,
au moyen d'une commande (230) du robot mobile, réaliser les étapes consistant à :
analyser les données de surveillance,
déterminer un type d'un obstacle détecté,
détecter le mouvement de l'obstacle, et
déterminer si l'intrusion a eu lieu dans la zone de nettoyage,
dans lequel, si l'intrusion est détectée :
entraîner l'émission d'un son d'alerte,
générer un message concernant la détection d'intrusion, et
le transmettre à un terminal mobile (300) ou à une agence de sécurité externe.

11. Procédé selon la revendication 10, comportant en outre l'étape consistant à :
changer le au moins un emplacement de surveillance ou ajouter un emplacement de surveillance en réponse à des informations sur un obstacle inclus dans une carte de la zone de nettoyage.

12. Procédé selon la revendication 10, comportant en outre l'étape consistant à :
définir un trajet de surveillance pour la zone de surveillance en reliant les emplacements de surveillance les uns aux autres.

13. Procédé selon la revendication 10, comportant en outre les étapes consistant à :
se déplacer jusqu'au au moins un emplacement de surveillance si la zone de surveillance est atteinte ;
faire tourner le corps principal (10) à un angle prédéterminé de sorte qu'un angle de prise de vue d'une unité d'acquisition d'images (140) fait face à une direction de surveillance dédiée au au moins un emplacement de surveillance ;
prendre des images de la direction de surveillance dédiée ; et
générer les données de surveillance sous la forme d'une image à partir des images prises.

14. Procédé selon la revendication 10, comportant en outre les étapes consistant à :
transmettre un emplacement du corps principal (10) au terminal mobile (300) tout en se déplaçant jusqu'à la zone de surveillance ;
afficher une carte de la zone de nettoyage et l'emplacement du corps principal (10) sur un écran d'affichage (310) du terminal mobile (300) ;
transmettre les données de surveillance au terminal mobile (300) ; et
afficher les données de surveillance sur l'écran d'affichage (310) du terminal mobile (300).
